# EUROPEAN PATENT SPECIFICATION

(11) **EP 1 770 134 B1**
(45) Date of publication and mention of the grant of the patent: **11.11.2009**
(21) Application number: 06020575.4
(22) Date of filing: 29.09.2006
(51) Int. Cl.: C09D 11/10

(54) **Photochemically curable ink composition comprising an alkylated oxirane**
Photochemisch härtbare Tinte enthaltend ein alkyliertes Oxiran
Composition d'encre durcissable photochimiquement comprenant un oxiran alkylee

(30) Priority: 29.09.2005 JP 2005284377
(43) Date of publication of application: 04.04.2007
(73) Proprietor: FUJIFILM Corporation, Minato-ku Tokyo (JP)
(72) Inventor: Kawakami, Hiroshi, c/o Fuji Photo Film Co., Ltd., Shizuoka (JP)
(74) Representative: HOFFMANN EITLE

(56) References cited:
- EP-A- 1 484 370
- US-A1- 2004 214 945
- US-A1- 2005 196 697

## Description

### FIELD OF THE INVENTION

The present invention relates to an ink composition and an inkjet ink, each of which can be used in ink-jet recording or the like; and specifically, the present invention relates to an ink composition allowing polymerization and curing (hardening) after printing, to an inkjet ink prepared therefrom, and to an image-forming method and a recorded material using the same.

### BACKGROUND OF THE INVENTION

UV inks that are cured by irradiation of ultraviolet (UV) ray and show UV-blocking property are known, as inks resistant to discoloration (color fading) or the like (see, for example, JP-A-2003-221528 ("JP-A" means unexamined published Japanese patent application)). Curing of such an ink when used proceeds generally in radical polymerization of a monomer component(s) contained therein (see, for example, JP-A-2003-246818 , JP-A-2003-292855 , JP-A-9-183927, JP-A-2004-91556, and JP-A-2004-43634).

Curing of the ink composition after printing proceeds in polymerization initiated by irradiation of high (active)-energy ray, and the ink is preferably curable even when the energy of high-energy ray is low. In other words, high sensitivity of the ink composition to the high-energy ray is preferable. If the sensitivity is raised to some high degree, it is possible to use a relatively-low-energy light-emitting diode efficiently, instead of a high-energy light source such as UV lamp.

Ink compositions containing an oxetane compound and an anthracene compound are described in JP-A-2004-91556 and JP-A-2004-43634, but the compositions each are still insufficient in sensitivity to high-energy ray, which results in insufficient curing, thereby causing a trouble of damage of the obtained image after printing, for example, by rubbing. JP-A-2005-139425 discloses an inkjet ink composition containing a particular onium salt generating no benzene, and containing an oxetane ring-containing compound. However, the inkjet ink composition described in JP-A-2005-139425 is high in viscosity of the inkjet ink in its composition, and the polymerized and cured film was low in toughness, and thus the cured product of a printed image shows brittleness.

US 2005/196697, EP-A-1 484370 and US 2004/214945 each teach ink compositions which comprise a combination of an oxetane compound and an oxirane compound.

### SUMMARY OF THE INVENTION

An object of the present invention is to provide an ink composition, in particular an inkjet ink composition, which allows polymerization curing of the composition after printing, by irradiation of high-energy ray, which is low in viscosity and high in sensitivity to the high-energy ray, which is excellent in curing property, and which overcomes the problem of brittleness of the cured film of a printed image. Another object of the present invention is to provide an image-forming method of forming an image on a recording material by using the ink composition, and to provide a recorded material by using the ink composition.

According to a first aspect, the present invention provides an ink composition comprising:
(i) an oxirane compound consisting of a monofunctional oxirane group-containing compound having an alkyl group having 8 or more carbon atoms and optionally a multifunctional oxirane group-containing compound,
(ii) 20 to 40 mass % of an oxetane group-containing photocationically polymerisable compound, and
(iii) a photocationic polymerisation initiator,
wherein the amount of the oxirane compound (i) is greater than the amount of the oxetane group-containing compound (ii).

Preferably, the ink composition further comprises a pigment or an oil-soluble dye, as a colorant.

According to a second aspect, the present invention provides the use of the ink composition according to the first aspect for ink-jet recording.

According to a third aspect, the present invention provides an image-forming method comprising recording an image by ink-jet recording using the ink composition according to the above first aspect.

According to a fourth aspect, the present invention provides a recording material obtainable by using an ink composition according to the above first aspect.

Other and further objects, features and advantages of the invention will appear more fully from the following description.

### DETAILED DESCRIPTION OF THE INVENTION

Hereinafter, the ink composition of the present invention, and the image-forming method and the recorded material using the same, will be described in detail.

### <Ink composition>

The ink composition of the present invention is constituted to allow curing of a recorded image recorded on a recording material by irradiation with high-energy rays. The ink composition of the present invention comprises:
20 to 40 mass % of an oxetane group-containing photocationically polymerisable compound,
one or more oxirane group-containing compounds present in an amount greater than the amount of the oxetane group-containing compound, and which include a monofunctional oxirane group-containing compound having an alkyl group having 8 or more carbon atoms, and
a photocationic polymerisation initiator.

In the present invention, the monofunctional cationically polymerizable compound means a cationically polymerizable compound having only one polymerizable functional group, e.g. a cationically polymerizable compound having one polymerizable functional group such as epoxy group. On the other hand, the term "multifunctional cationically polymerizable compound" means a cationically polymerizable compound having two or more polymerizable functional groups, e.g. a cationically polymerizable compound having two or more polymerizable functional groups, such as epoxy groups.

The ink composition of the present invention may be a colorless ink containing no colorant, but is preferably an ink containing a colorant. The ink composition of the present invention may contain another component(s) of any of various additives, as needed.

### (Cationically polymerizable compound)

The cationically polymerizable compound for use in the present invention is a cationically polymerizable compound that initiates polymerization reaction and is cured by an active species generated from a photopolymerization initiator.

Hereinafter, the cationically polymerizable compound will be described.

### <Monofunctional oxirane group-containing compound>

The ink composition of the present invention contains a monofunctional oxirane group-containing compound having an alkyl group having 8 or more carbon atoms, as the cationically polymerizable compound. Herein, the number of carbon atoms constituting the oxirane ring is not counted.

The oxirane group-containing compound may be any of a monomer, oligomer, or polymer, as long as it is a compound containing one oxirane group (oxiranyl group) having the following oxirane ring in the molecule, specifically the compound having one monofunctional oxirane group and having an alkyl group having 8 or more carbon atoms.

Examples of the oxirane group-containing compounds include monomers having one oxirane ring in the molecule, such as higher aliphatic alcohol monoglycidyl ethers, monoglycidyl ethers of phenol, cresol, or an alkylene oxide adduct thereof. Specific examples thereof include epoxidized α-olefins, and epoxidized polybutenes.

The oxirane group-containing compound may be used singly or in combination of two or more thereof.

The upper limit of the number of carbon atoms in the alkyl group in the monofunctional oxirane group-containing compound for use in the present invention, is not particularly limited, but the number of carbon atoms is preferably 50 or less, more preferably 40 or less, and particularly preferably 35 or less. The alkyl group may be a straight-chain, branched, or cyclic group, but is preferably a straight-chain group, more preferably a straight-chain alkyl group having an oxirane group at one terminal, and particularly preferably a straight-chain group having 8 or more carbon atoms to constitute the straight-chain. The alkyl group may contain one or more ether bond(s) in the alkyl chain. Further, the alkyl group may have a substituent, and examples of the substituent include a hydroxyl group and an amino group.

The monofunctional oxirane group-containing compound for use in the present invention is contained in the ink composition in an amount of preferably 5 mass% or more, more preferably 10 to 60 mass%, and particularly preferably 20 to 50 mass%.

Hereinafter, specific preferable examples of the oxirane group-containing compound (exemplified compounds (i) to (viii)) are listed below, but the invention is not limited to those.

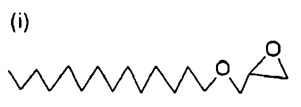

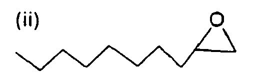

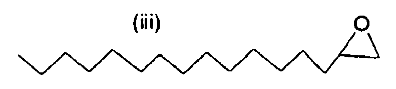

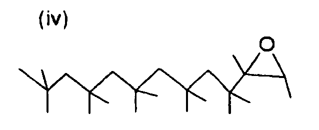

### <Multifunctional oxirane group-containing compound>

A multifunctional oxirane group-containing compound may be additionally used as the photocationically polymerizable compound for use in the present invention.

Specific examples of the multifunctional oxirane group-containing compounds include known aromatic epoxy resins, alicyclic epoxy resins, and aliphatic epoxy resins. The epoxy resins include monomers, oligomers, and polymers.

Preferable examples of the aromatic epoxy resins include di- or poly-glycidyl ethers prepared via reaction of a polyvalent phenol having at least one aromatic ring or the alkylene oxide adduct thereof with epichlorohydrin. Examples thereof include di- or poly-glycidyl ethers of bisphenol A or the alkylene oxide adduct thereof, di- or poly-glycidyl ethers of a hydrogenated bisphenol A or the alkylene oxide adduct thereof, and novolac-type epoxy resins. Herein, examples of the alkylene oxide include ethylene oxide, and propylene oxide.

Preferable examples of the alicyclic epoxy resins include cyclohexene oxide- or cyclopentene oxide-containing compounds, prepared by epoxidizing a compound having at least two cycloalkene rings such as cyclohexene or cyclopentene with a suitable oxidizing agent such as hydrogen peroxide or a peracid. Examples thereof include 3,4-epoxycyclohexylmethyl-3,4-epoxycyclohexyl carboxylate.

Preferable examples of the aliphatic epoxy resins include di- or poly-glycidyl ethers of an aliphatic polyvalent alcohol or the alkylene oxide adduct thereof. Examples thereof include alkylene glycol diglycidyl ethers, such as ethylene glycol diglycidyl ether, propylene glycol diglycidyl ether, and 1,6-hexanediol diglycidyl ether; polyvalent alcohol polyglycidyl ethers, such as di- or tri-glycidyl ether of glycerol or the alkylene oxide adduct thereof; polyalkylene glycol diglycidyl ethers, such as diglycidyl ether of polyethylene glycol or the alkylene oxide adduct thereof, diglycidyl ethers of polypropylene glycol or the alkylene oxide adduct thereof. Herein, examples of the alkylene oxide include ethylene oxide, and propylene oxide.

### <Oxetane group-containing compound>

The ink composition of the present invention contains at least one oxetane group-containing compound as the cationically polymerizable compound. The aforementioned compound can undergo polymerization to be cured upon high-energy ray irradiation by action of a photopolymerization initiator described below, and is capable of completing the curing reaction in a short period of time. Thus, the aforementioned compound is particularly effective in preventing discoloration of an image of the dye which is apt to light-fade during or after curing (polymerization reaction), and can form an image, which is excellent in tint (color hue), color density, and definition, and which has resistance to light similar to that of an image resulting from a pigment.

In the present invention, the oxirane group-containing compound is used in an amount greater than that of the oxetane group-containing compound. The content of the oxetane group-containing compound is 20 to 40 mass%.

The oxetane group-containing compound can be selected appropriately from compounds having at least one oxetane group (oxetanyl group) in the molecule.

For example, the compound having one oxetane group in the molecule is preferably a compound represented by formula (1-a), and the compound having two or more oxetane groups in the molecule is preferably a compound represented by formula (1-b).

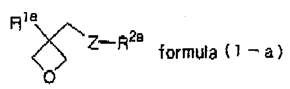

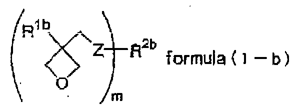

First, the oxetane group-containing compound represented by formula (1-a) will be described.

In formula (1-a) above, Z represents an oxygen atom or a sulfur atom, preferably an oxygen atom. R^{1a} represents a hydrogen atom, a fluorine atom, an alkyl group having 1 to 6 carbon atoms (such as methyl, ethyl, propyl, or butyl), a fluoroalkyl group having 1 to 6 carbon atoms, an allyl group, an aryl group, a furyl group, or a thienyl group, and preferably an alkyl group having 1 to 6 carbon atoms (in particular, methyl or ethyl).

R^{2a} represents a hydrogen atom, an alkyl group having 1 to 6 carbon atoms (such as methyl, ethyl, propyl, or butyl), an alkenyl group having 1 to 6 carbon atoms (such as 1-propenyl, 2-propenyl, 2-methyl-1-propenyl, 2-methyl-2-propenyl, 1-butenyl, 2-butenyl, or 3-butenyl), an aryl group (such as phenyl, benzyl, fluorobenzyl, methoxybenzyl, or phenoxyethyl), an alkylcarbonyl group having 2 to 6 carbon atoms (such as propylcarbonyl, butylcarbonyl, or pentylcarbonyl), an alkoxycarbonyl group having 2 to 6 carbon atoms (such as ethoxycarbonyl, propoxycarbonyl, or butyloxycarbonyl), an alkoxycarbamoyl group having 2 to 6 carbon atoms (such as ethoxycarbamoyl, propoxycarbamoyl, or butylpentyloxycarbamoyl), or the like.

Among the oxetane group-containing compounds represented by formula (1-a), compounds, in which R^{1a} is a lower alkyl group (in particular, ethyl group); R^{2a} is a hydrogen atom, a butyl group, a phenyl group, or a benzyl group; and Z is an oxygen atom, are particularly preferable embodiments. Herein, the lower alkyl group means an alkyl group having 1 to 3 carbon atoms (the same should apply hereinafter).

The oxetane group-containing compound represented by formula (1-a) may be used singly, or in combination of two or more of these.

Next, the oxetane group-containing compound represented by formula (1-b) will be described.

In formula (1-b), m is 2, 3 or 4; and Z represents an oxygen atom or a sulfur atom, preferably an oxygen atom.

In formula (1-b), R^{1b} represents a hydrogen atom, a fluorine atom, an alkyl group having 1 to 6 carbon atoms (such as methyl, ethyl, propyl, or butyl), a fluoroalkyl group having 1 to 6 carbon atoms, an allyl group, an aryl group, or a furyl group.

R^{2b} represents a straight-chain or branched alkylene group having 1 to 12 carbon atoms; a straight-chain linear or branched poly(alkyleneoxy) group; or a divalent group selected from the group consisting of groups represented by any of formulae (3), (4) and (5).

The straight-chain or branched alkylene group having 1 to 12 carbon atoms is preferably a group represented by formula (2). In formula (2), R³ represents a lower alkylene group, such as methylene, ethylene, or propylene.

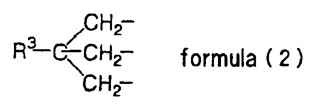

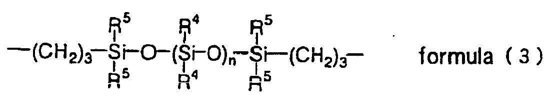

In formula (3), n is 0 or an integer of 1 to 2,000; R⁴ represents an alkyl group having 1 to 10 carbon atoms (such as methyl, ethyl, propyl, butyl, pentyl, hexyl, heptyl, octyl, or nonyl), or a group selected from groups represented by formula (6); and R⁵ represents an alkyl group having 1 to 10 carbon atoms (such as methyl, ethyl, propyl, butyl, pentyl, hexyl, heptyl, octyl, or nonyl), preferably a methyl group.

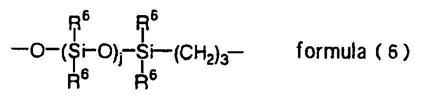

In formula (6), j is 0 or an integer of 1 to 100; and R⁶ represents an alkyl group having 1 to 10 carbon atoms (such as methyl, ethyl, propyl, butyl, pentyl, hexyl, heptyl, octyl, or nonyl), preferably a methyl group.

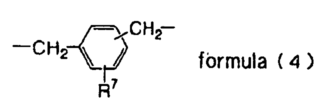

In formula (4), R⁷ represents a hydrogen atom, an alkyl group having 1 to 10 carbon atoms (such as methyl, ethyl, propyl, butyl, pentyl, hexyl, heptyl, octyl, or nonyl), an alkoxy group having 1 to 10 carbon atoms (such as methoxy, ethoxy, propoxy, butoxy, or pentoxy), a halogen atom (such as fluorine, chlorine, bromine, or iodine), a nitro group, a cyano group, a mercapto group, an alkoxycarbonyl group (such as methyloxycarbonyl, ethyloxycarbonyl, or butyloxycarbonyl group), or a carboxyl group.

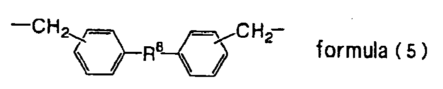

In formula (5), R⁸ represents an oxygen atom, a sulfur atom, NH, SO, SO₂, CH₂, C(CH₃)₂, or C(CF₃)₂.

Among the oxetane group-containing compounds represented by formula (1-b), compounds of the formula (1-b) in which R^{1b} is a lower alkyl group (such as methyl, ethyl, or propyl), particularly preferably an ethyl group, are preferable embodiments; and compounds, in which R^{2b} is a group represented by formula (4) wherein R⁷ is a hydrogen atom, a hexamethylene group, a group represented by formula (2) wherein R³ is an ethylene group, or a group represented by formula (3) wherein R⁵ is a methyl group and R⁴ is a group represented by formula (6) wherein R⁶ is a methyl group; Z is an oxygen atom; and m is 2, are preferable embodiments.

Further, examples of the compound having two or more oxetane groups in the molecule include compounds represented by formula (7) or (8).

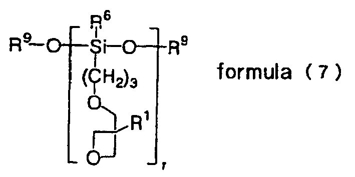

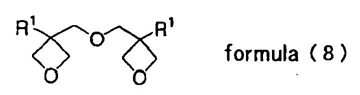

In formula (7), r represents an integer of 25 to 200; and R⁹ represents an alkyl group having 1 to 4 carbon atoms, or a trialkylsilyl group. R¹ in formulae (7) and (8) and R⁶ in formula (7) have the same meanings as R^{1b} in formula (1-b) and R⁶ in formula (6), respectively.

Hereinafter, specific preferable examples of the oxetane group-containing compound represented by formula (1-a) or (1-b) [exemplified compounds 1 to 37 and (a) to (f)] are listed below, but the invention is not limited to those.

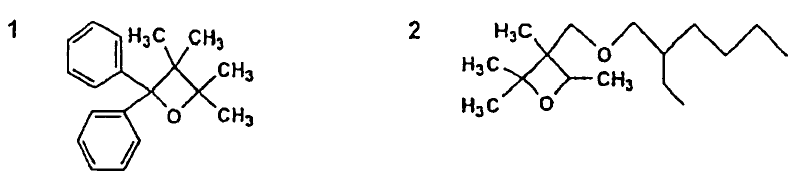

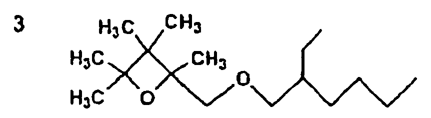

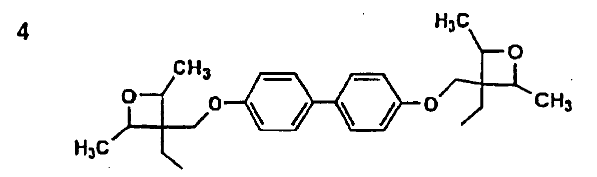

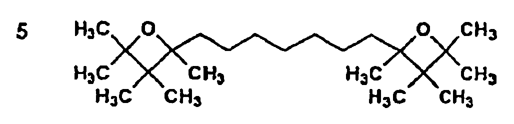

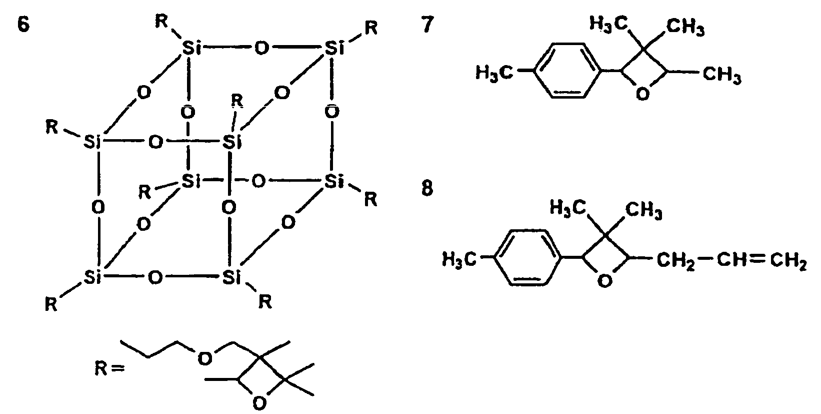

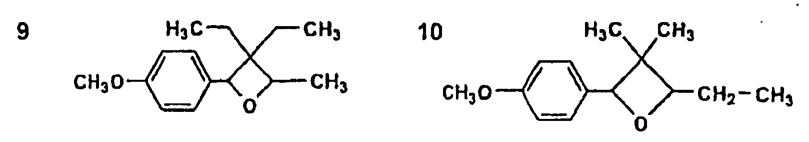

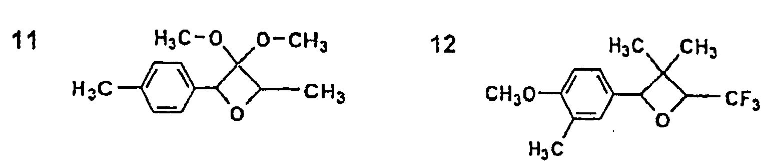

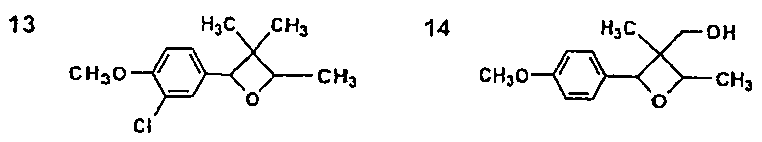

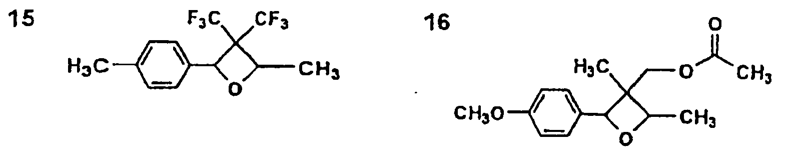

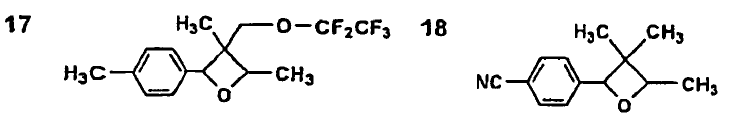

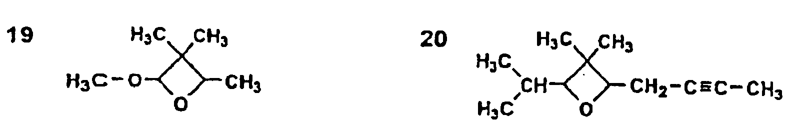

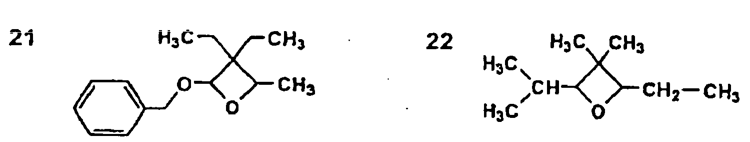

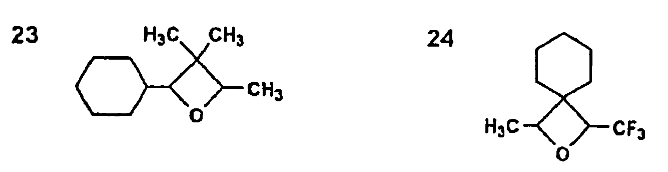

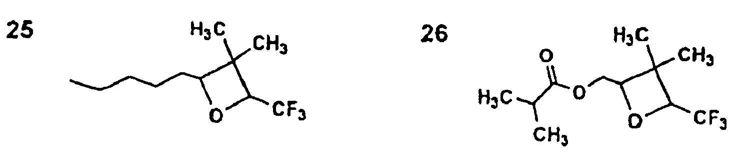

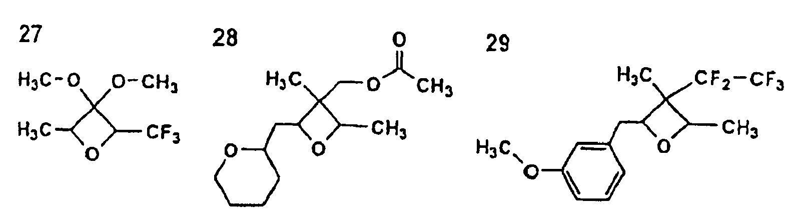

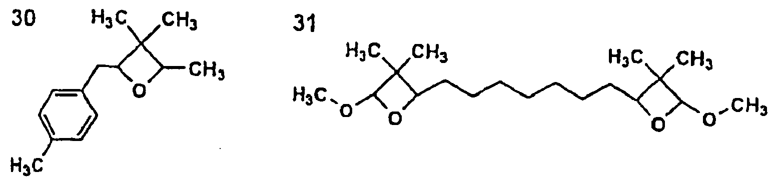

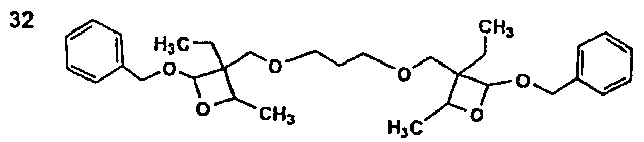

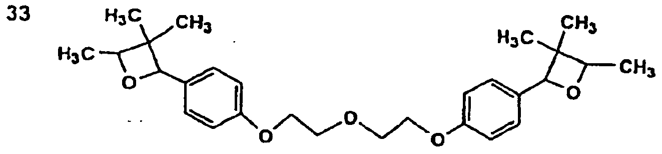

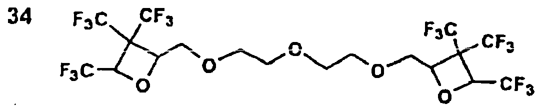

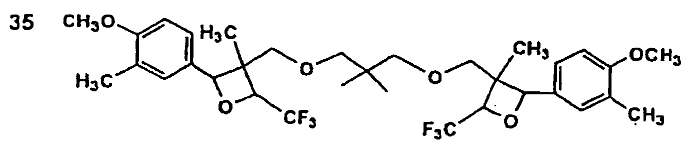

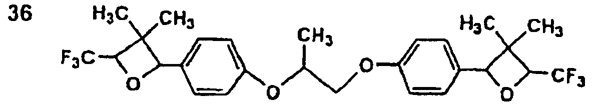

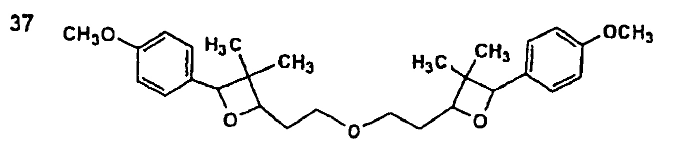

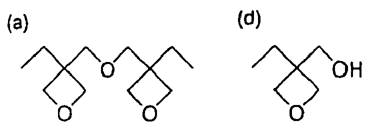

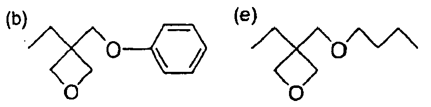

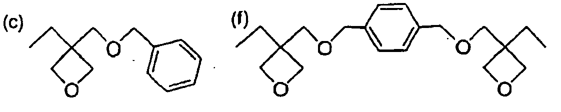

The oxetane group-containing compound can be synthesized with reference, for example, to: (1) H. A. J. Curless, "Synthetic Organic Photochemistry", Plenum, New York (1984); (2) M. Braun, Nachr. Chem. Tech. Lab., 33, 213 (1985); (3) S. H. Schroeter, J. Org. Chem., 34, 5, 1181 (1969); (4) D. R. Arnold, Adv. Photochem., 6, 301 (1968); (5) "Heterocyclic Compounds with Three- and Four-membered Rings", Part Two, Chapter IX, Interscience Publishers, John Wiley & Sons, New York (1964); (6) Bull. Chem. Soc. Jpn., 61, 1653 (1988); (7) Pure Appl. Chem., A29 (10), 915 (1992); (8) Pure Appl. Chem., A30 (2&3), 189 (1993); and (9) JP-A-6-16804, (10) Germany Patent No. 1,021,858.

The oxetane group-containing compound represented by formula (1-b) may also be used singly or in combination of two or more.

Among the oxetane group-containing compounds above, exemplified compounds (a), (b), (d), or (f) are preferable.

In addition, a vinyl ether compound may be contained as the photocationically polymerizable compound, within the range that does not impair the advantageous effects of the present invention. Examples of the vinyl ether compound include di- or tri-vinyl ether compounds, such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; monovinyl ether compounds, such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-O-propylene carbonate, dodecyl vinyl ether, diethylene glycol monovinyl ether, and octadecyl vinyl ether.

The content of the photocationically polymerizable compound in the ink composition of the present invention is preferably in the range of 98 to 50 mass%, more preferably 95 to 60 mass%, and further preferably 90 to 70 mass%, to the total mass of the ink composition, from the viewpoints of the sensitivity based on polymerization reactivity and the viscosity of ink composition.

### (Photocationic polymerization initiator)

The ink composition of the present invention contains a photopolymerization initiator (photochemical acid generator) for polymerizing and curing the photocationically polymerizable compound. The photopolymerization initiator has absorption in a high-energy ray wavelength region, and can act onto and accelerate polymerization and curing of the polymerizable compound described above when exposed to high-energy ray. The photochemical acid generator is a compound that generates an acid in chemical change by action of the high-energy ray or by interaction with an electron excited state of a sensitizing dye.

In the present invention, the "high-energy ray" is an active ray that makes the photopolymerization initiator generate a radical or cation, and examples thereof include ultraviolet ray (UV ray), visible ray, γ ray, α ray, X ray, as well as electron beam. Examples of a specific light source that can be used include LD, LED (light-emitting diode), fluorescent lamp, low-pressure mercury lamp, high-pressure mercury lamp, metal halide lamp, carbon arc lamp, xenon lamp, and chemical lamp. Preferable examples of the light source include LED, high-pressure mercury lamp, and metal halide lamp.

In the present invention, any of photopolymerization initiators (photochemical acid generators) may be used, and many examples thereof are described, for example, by Bruce M. Monroe et al., Chemical Revue, 93, 435 (1993); R. S. Davidson, Journal of Photochemistry and Biology A: Chemistry, 73, 81 (1993); J. P. Faussier, "Photoinitiated Polymerization - Theory and Applications"; Rapra Review vol. 9, Report, Rapra Technology (1998); and M. Tsunooka et al., Prog. Polym. Sci., 21, 1 (1996). Further, many compounds for use in chemically amplified photoresist and photocationic polymerization are described in "Organic Materials for Imaging" (Japanese Research Association for Organic Electronics Materials Ed., Bun-Shin Shuppan (1993), p. 187 to 192). Further, also known are the compounds that cause bond cleavage oxidatively or reductively via interaction with the electron excited state of a sensitizing dye, as described, for example, by F. D. Saeva, Topics in Current Chemistry, 156, 59 (1990); G. G. Maslak, Topics in Current Chemistry, 168, 1 (1993); H. B. Shuster et al., JACS, 112, 6329 (1990); I. D. F. Eaton et al., JACS, 102, 3298 (1980).

Further, commercially available compounds may also be used, and examples thereof include Irgacure 250 and 1870 (trade names, manufactured by Ciba Specialty Chemicals).

Preferable examples of the photopolymerization initiator include (a) aromatic ketones, (b) aromatic onium salt compounds, (c) organic peroxides, (d) hexaarylbiimidazole compounds, (e)ketoxime ester compounds, (f) borate compounds, (g) azinium compounds, (h) metallocene compounds, (i) active ester compounds, and (j) carbon halogen bond-containing compounds.

Specific preferable examples of the compounds (a) to (j) include those shown below, but the invention is not limited to those.

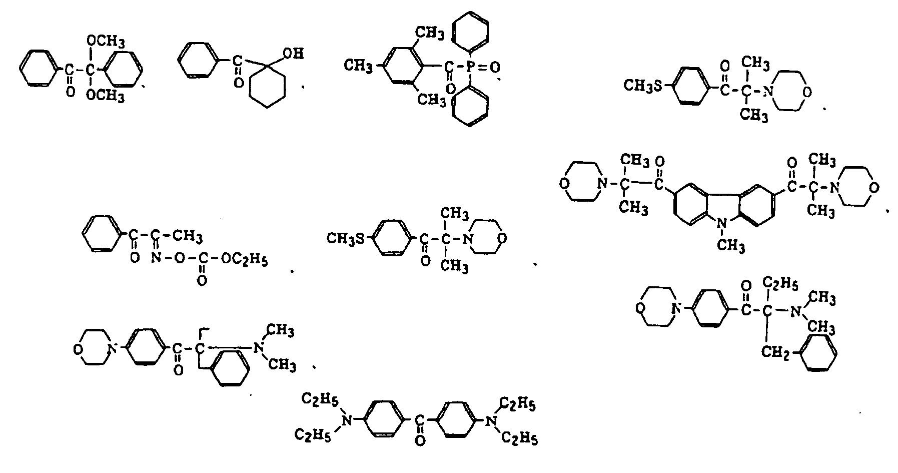

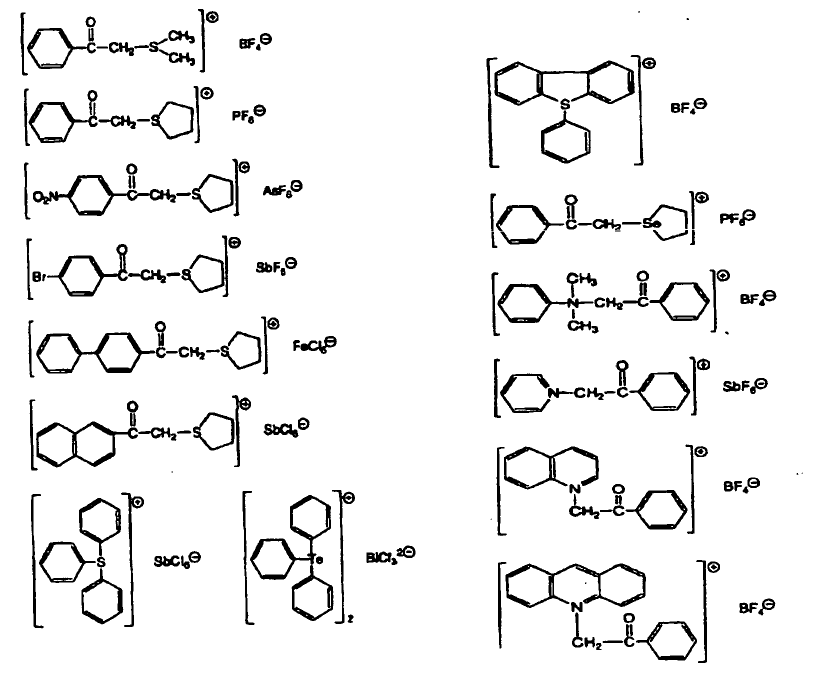

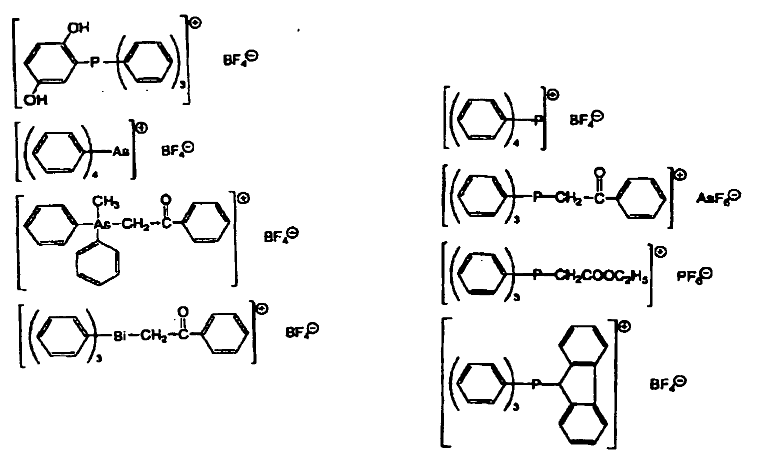

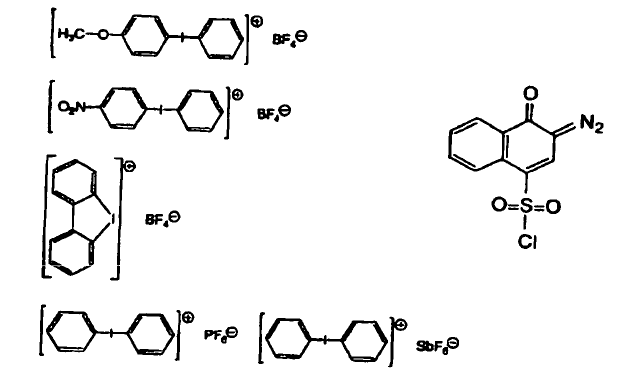

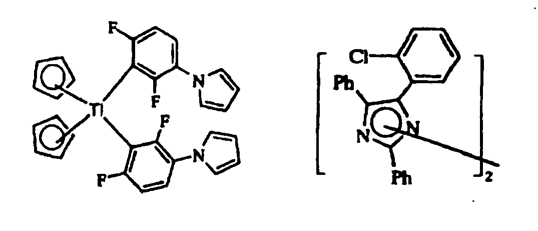

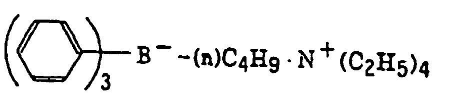

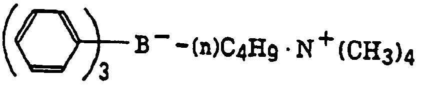

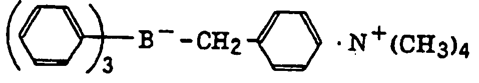

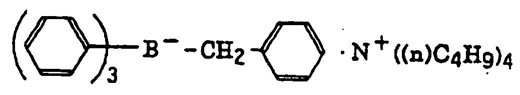

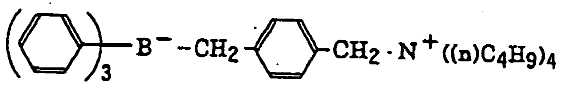

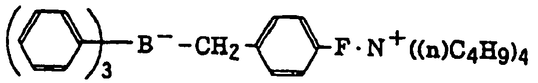

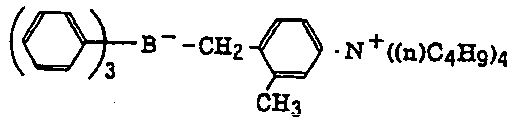

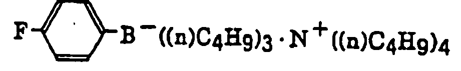

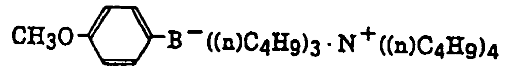

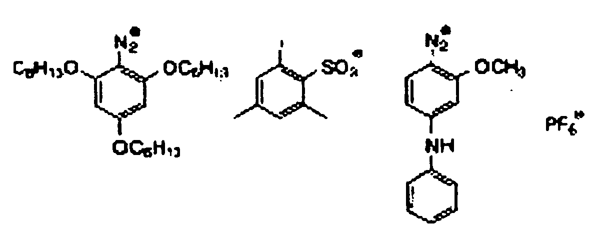

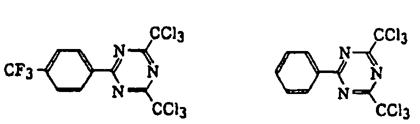

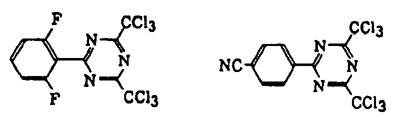

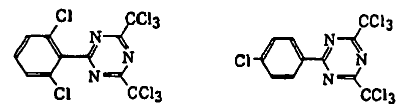

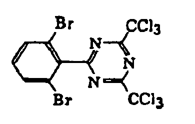

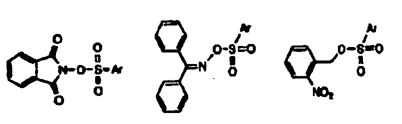

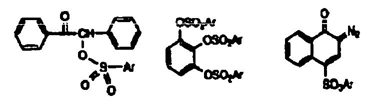

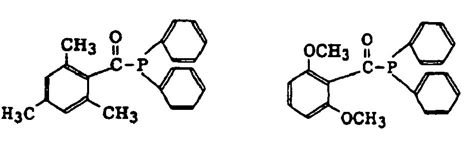

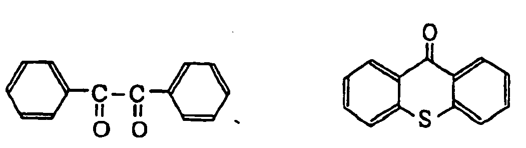

Further, any of other compounds described below can also be used: bis(4-hexylphenyl)iodonium hexafluorophosphate, (4-hexylphenyl)phenyliodonium hexafluorophosphate, bis(4-octylphenyl)iodonium hexafluorophosphate, (4-octylphenyl)phenyliodonium hexafluorophosphate, bis(4-decylphenyl)iodonium hexafluorophosphate, (4-isobutylphenyl)phenyliodonium hexafluorophosphate, bis(4-isobutylphenyl)iodonium hexafluorophosphate, (4-dodecylphenyl)phenyliodonium hexafluorophosphate, (2-hydroxydodecyloxyphenyl)phenyliodonium hexafluorophosphate, (2-hydroxytetradecyloxyphenyl)phenyliodonium hexafluorophosphate, and bis(4-decylphenyl)iodonium hexafluoroantimonate.

In the present invention, use of (4-isobutylphenyl)phenyliodonium hexafluorophosphate, particularly as dissolved in propylene carbonate, is preferable.

In some cases, use of such an iodonium salt photoinitiators as a mixture of two or more, in the ink composition of the present invention, may be advantageous.

The content of the photopolymerization initiator in the ink composition is preferably within the range of 2 to 12 mass%, more preferably 3 to 6 mass%, to the cationically polymerizable compound described above. It is possible to obtain a sufficient polymerization curing effect, by adjusting the content within the range above.

### [Surfactant]

To the ink composition of the present invention, any of known surfactants is preferably contained. Examples of the known surfactant include those described in JP-A-62-173463 and JP-A-62-183457. Specific examples thereof include anionic surfactants, such as dialkyl sulfosuccinate salts, alkylnaphthalenesulfonate salts, and fatty acid salts; nonionic surfactants, such as polyoxyethylene alkyl ethers, polyoxyethylene alkyl allyl ethers, acetylene glycols, and polyoxyethylene/polyoxypropylene block copolymers; and cationic surfactants, such as alkylamine salts and quaternary ammonium salts. An organofluoro compound may be used in place of the above-described known surfactant. The organofluoro compound is preferably hydrophobic. Examples of the organofluoro compound include fluorine-containing surfactants, oily fluorine-containing compounds (e.g., fluorine oil), and solid state fluorine-containing compound resins (e.g., tetrafluoroethylene resins). Examples of the organofluoro compound are described, for example, in JP-B-57-9053 (columns from 8 to 17) ("JP-B" means examined Japanese patent publication), and JP-A-62-135826.

### (Colorant)

The ink composition of the present invention is possible to form a visible image, by adding a colorant thereto. The colorant that can be used in the ink composition of the present invention is not particularly limited, and may be selected appropriately from known various colorants (pigments and dyes) to use, according to application. For example, use of a pigment is preferable, for forming an image excellent in weather resistance. Either a water-soluble dye or an oil-soluble dye may be used as the dye, but use of an oil-soluble dye is preferable.

### <Pigment>

First, the pigment that can be preferably used as the colorant in the present invention, will be described.

The pigment is not particularly limited, and use may be made of any of commonly commercially available pigments, including organic and inorganic pigments; dispersions of a pigment dispersed in an insoluble resin, as a dispersant, or the like; and pigments surface-grafted with a resin. Further, resin particles dyed with a dye may also be used.

Examples of such pigments include the pigments described, for example, in, edited by Seijiro Itoh, "Dictionary of Pigments" (2000); W. Herbst, K. Hunger, "Industrial Organic Pigments"; and JP-A-2002-12607, JP-A-2002-188025, JP-A-2003-26978, and JP-A-2003-342503.

Specific examples of the organic or inorganic pigment that can be used in the present invention include:
Yellow-color-forming pigments, including monoazo pigments, such as C.I. Pigment Yellow 1 (Fast Yellow G, etc.) and C.I. Pigment Yellow 74; disazo pigments, such as C.I. Pigment Yellow 12 (Disazo Yellow AAA, etc.) and C.I. Pigment Yellow 17; non-benzidine-series azo pigments, such as C.I. Pigment Yellow 180; azolake pigments, such as C.I. Pigment Yellow 100 (tartrazine yellow lake, etc.); condensation azo pigments, such as C.I. Pigment Yellow 128, C.I. Pigment Yellow 93, and C.I. Pigment Yellow 95 (condensation azo yellow GR, etc.); acidic dye lake pigments, such as C.I. Pigment Yellow 115 (quinoline yellow lake, etc.); basic dye lake pigments, such as C.I. Pigment Yellow 18 (thioflavin lake, etc.); anthraquinone-series pigments, such as fravantrone yellow (Y-24); isoindolinone pigments, such as isoindolinone yellow 3RLT (Y-110); quinophtharone pigments, such as quinophtharone yellow (Y-138); isoindoline pigments, such as isoindoline yellow (Y-139); nitroso pigments, such as C.I. Pigment Yellow 153 (nickel nitroso yellow, etc.); metal complex salt azomethine pigments, such as C.I. Pigment Yellow 117 (copper azomethine yellow, etc.), and the like;
Red- or magenta-color-forming pigments, including monoazo-series pigments, such as C.I. Pigment Red 3 (toluidine red, etc.); disazo pigments, such as C.I. Pigment Red 38 (pyrazolone red B, etc.); azolake pigments, such as C.I. Pigment Red 53:1 (lake red C, etc.) and C.I. Pigment Red 57: 1 (Brilliant Carmine 6B); condensation azo pigments, such as C.I. Pigment Red 144 (condensation azo red BR, etc.); acidic dye lake pigments, such as C.I. Pigment Red 174 (phloxine B lake, etc.); basic dye lake pigments, such as C.I. Pigment Red 81 (rhodamine 6G' lake, etc.); anthraquinone-series pigments, such as C.I. Pigment Red 177 (dianthraquinonyl red, etc.); thioindigo pigments, such as C.I. Pigment Red 88 (Thioindigo Bordeaux, etc.); perynone pigments, such as C.I. Pigment Red 194 (perynone red, etc.); perylene pigments, such as C.I. Pigment Red 149 (perylene scarlet, etc.); quinacridone pigments, such as C.I. Pigment Violet 19 (unsubstituted quinacridone) and C.I. Pigment Red 122 (quinacridone magenta, etc.); isoindolinone pigments, such as C.I. Pigment Red 180 (isoindolinone red 2BLT, etc.); alizarin lake pigments, such as C.I. Pigment Red 83 (madder lake, etc.), and the like;
Blue- or cyan-color-forming pigments, including disazo-series pigments, such as C.I. Pigment Blue 25 (dianisidine blue, etc.); phthalocyanine pigments, such as C.I. Pigment Blue 15 (phthalocyanine blue, etc.); acidic dye lake pigments, such as C.I. Pigment Blue 24 (peacock blue lake, etc.); basic dye lake pigments, such as C.I. Pigment Blue 1 (Vicrotia Pure Blue BO lake, etc.); anthraquinone-series pigments, such as C.I. Pigment Blue 60 (indanthron blue, etc.); alkali blue pigments, such as C.I. Pigment Blue 18 (alkali Blue V-5:1), and the like;
Green-color-forming pigments, including phthalocyanine pigments, such as C.I. Pigment Green 7 (phthalocyanine green) and C.I. Pigment Green 36 (phthalocyanine green); azo metal complex pigments, such as C.I. Pigment Green 8 (nitroso green), and the like;
Orange-color-forming pigments, including isoindoline-series pigments, such as C.I. Pigment Orange 66 (isoindoline orange); and anthraquinone-series pigments, such as C.I. Pigment Orange 51 (dichloropyranthron orange), and the like; and
Black-color-forming pigments, such as carbon black, titanium black, aniline black, and the like.

Further, specific examples of white pigment that can be used include basic lead carbonate (2PbCO₃Pb(OH)₂, so-called silver white), zinc oxide (ZnO, so-called zinc white), titanium oxide (TiO₂, so-called titanium white), strontium titanate (SrTiO₃, so-called titanium strontium white), and the like.

Titanium oxide has a lower specific gravity and a higher refractive index, as compared to other white pigments, and is more stable chemically or physically, and thus has greater masking and/or coloring power as a pigment, and is excellent in resistance to acid or alkali and other environmental factors. Thus, use of titanium oxide as the white pigment is preferable. Off course, another white pigment(s) (including white pigments other than those enumerated in the above) may be used, as needed.

For dispersing the pigment(s), any of dispersing machines may be used, for example, a ball mill, a sand mill, an attriter, a roll mill, a jet mill, a homogenizer, a paint shaker, a kneader, an agitator, a Henschel mixer, a colloid mill, an ultrasonic wave homogenizer, a pearl mill, and a wet jet mill.

It is also possible to add a dispersant, when conducting dispersing of the pigment. Examples of the dispersant include hydroxyl group-containing carboxylic acid esters, salts of a long-chain polyaminoamide with a high-molecular-weight acid ester, high-molecular-weight polycarboxylic acid salts, high-molecular-weight unsaturated acid esters, polymeric copolymers, modified polyacrylates, polyvalent aliphatic carboxylic acids, naphthalenesulfonic acid/formalin condensates, polyoxyethylene alkylphosphoric acid esters, pigment derivatives, and the like. Use of a commercially available polymeric dispersant, e.g. a Solsperse series product, manufactured by Lubrizol, is also preferable.

A dispersing aid suitable to be a synergist to the pigment to be used, may be used. The dispersant and dispersing aid are preferably added in an amount of 1 to 50 parts by mass, to 100 parts by mass of the pigment.

In the ink composition, a solvent may be added as a dispersion medium for various components such as the pigment, or alternatively, without any solvent, the polymerizable compound above, which is a low-molecular weight component, may be used as a dispersion medium. Contrary to the above, the ink composition of the present invention preferably contains no solvent, since the ink composition of the present invention is a radiation-curable ink that is cured after application on a recording medium (recording material). This is because if a solvent remains in the cured ink image, the remaining solvent leads to deterioration in solvent resistance or causes a problem of volatile organic compounds (VOC) from the remaining solvent. From the viewpoints above, as the dispersion medium, the polymerizable compound is preferably used, and in particular, it is preferable to choose the cationically polymerizable monomer (compound) having the lowest viscosity, for improving dispersing suitability and handling property of the ink composition.

The volume average particle diameter of the pigment particles is preferably 0.02 to 0.60 µm, and the pigment, dispersant, and dispersion medium are selected as well as the dispersion and filtration conditions are set such that the maximum particle diameter would be preferably 3 µm or less and more preferably 1 µm or less. By such a particle-diameter control, clogging of head nozzles can be prevented, and storage stability, transparency and curing sensitivity of the ink can be maintained.

### <Dye>

Next, the dye that can be preferably used as the colorant in the present invention will be described.

The dye to be used may be appropriately selected from known compounds (dyes). Specific examples of the dye include the dyes described in JP-A-2002-114930, in paragraphs [0023] to [0089].

Examples of a yellow dye that can be used include aryl- or heteryl-azo dyes having any of phenols, naphthols, anilines, pyrazolones, pyridones, or open-chain-type active methylene compounds, as a coupling component; azomethine dyes, for example, having an open-chain-type active methylene compound, as a coupling component; methine dyes, such as benzylidene dyes and monomethine oxonol dyes; quinone-series dyes, such as naphthoquinone dyes and anthraquinone dyes; as well as quinophtharone dyes, nitro dyes, nitroso dyes, acridine dyes, and acridinone dyes.

Examples of a magenta dye that can be used include aryl- or heteryl-azo dyes having any of phenols, naphthols, anilines, pyrazolones, pyridones, pyrazolotriazoles, closed-chain-type active methylene compounds (e.g., dimedone, barbituric acid, and 4-hydroxycoumarin derivatives), or electron-excess heterocycles (e.g., pyrrole, imidazole, thiophene, and thiazole derivatives), as a coupling component; azomethine dyes, for example, having any of pyrazolones or pyrazolotriazoles, as a coupling component; methine dyes, such as arylidene dyes, styryl dyes, merocyanine dyes, and oxonol dyes; carbonium dyes, such as xanthene dyes; diphenylmethane dyes; triphenylmethane dyes; quinone-series dyes, such as naphthoquinone, anthraquinone, and anthrapyridone dyes; fused polycyclic dyes, such as dioxazine dyes.

Examples of a cyan dye that can be used include azomethine dyes, such as indoaniline dyes and indophenol dyes; polymethine dyes, such as cyanine dyes, oxonol dyes, and merocyanine dyes; carbonium dyes, such as xanthene dyes; diphenylmethane dyes; triphenylmethane dyes; phthalocyanine dyes; anthraquinone dyes; aryl- or heteryl-azo dyes, for example, having any of phenols, naphthols, anilines, pyrrolopyrimidin-ons or pyrrolotriazine-on derivatives, as a coupling component; and indigo/thioindigo dyes.

The dyes above each may develop a color of yellow, magenta, or cyan, only when a part of the chromophore is dissociated. In such a case, the counter cation may be an inorganic cation, such as an alkali metal, or ammonium; or an organic cation, such as pyridinium or quaternary ammonium salt; or a cationic polymer having such a partial structure.

The dye that can be used in the present invention is preferably soluble in oil. Specifically, the "oil-soluble" dye means a dye having a solubility in water at 25°C (the mass of the colorant dissolved in 100 g of water) of generally 1 g or less, preferably 0.5 g or less, and more preferably 0.1 g or less. Accordingly, a so-called oil-soluble dye that is insoluble in water can be preferably used.

It is also preferable to introduce an oil-solubilizing group (i.e. a group rendering the dye soluble in an oil) into the basic structure (nuclear) of the dye mentioned in the above that can be used in the present invention, to ensure that the dye is dissolved in a necessary amount in the ink composition.

Examples of the oil-solubilizing group include long-chain branched alkyl groups, long-chain branched alkoxy groups, long-chain branched alkylthio groups, long-chain branched alkylsulfonyl groups, long-chain branched acyloxy groups, long-chain branched alkoxycarbonyl groups, long-chain branched acyl groups, long-chain branched acylamino groups, long-chain branched alkylsulfonylamino groups, and long-chain branched alkylaminosulfonyl groups, as well as aryl, aryloxy, aryloxycarbonyl, arylcarbonyloxy, arylaminocarbonyl, arylaminosulfonyl or arylsulfonylamino groups each containing any of the aforementioned long-chain branched groups.

Alternatively, it is also possible to convert a water-soluble dye containing a carboxylic acid or sulfonic acid group, with a long-chain branched alcohol, amine, phenol, or aniline derivative, thereby to obtain a target dye having an oil-solubilizing group, such as an alkoxycarbonyl, aryloxycarbonyl, alkylaminosulfonyl, or arylaminosulfonyl group.

The oil-soluble dye preferably has a melting point of 200°C or lower, more preferably 150°C or lower, and further preferably 100°C or lower. Use of a low-melting-point oil-soluble dye enables to reduce crystal precipitation of the colorant in the ink composition and improve the storage stability of the ink composition.

Further, the dye preferably has a high oxidation potential (in the noble direction), for improving discoloration resistance, in particular resistance to oxidative materials such as ozone, and curing efficiency. Thus, it is preferable to use the oil-soluble dye that can be used in the present invention having an oxidation potential versus saturated calomel electrode (vs. SCE) of 1.0 V or more, i.e. 1.0 V or higher in the noble direction (vs. SCE). The higher the oxidation potential is, the more preferable it is, and the dye having the oxidation potential of 1.1 V (vs. SCE) or more is more preferable, and the dye having the oxidation potential of 1.15 V (vs. SCE) or more is particularly preferable.

As the yellow color dye, compounds having the structure represented by formula (Y-I), as described in JP-A-2004-250483, are preferable.

Examples of a particularly preferable dye include the dyes represented by any of formulae (Y-II) to (Y-IV), as described in JP-A-2004-250483, paragraph No. [0034], and specific examples thereof include the compounds described in JP-A-2004-250483, paragraph Nos. [0060] to [0071]. The oil-soluble dyes represented by formula (Y-I) described in the aforementioned publication may be used not only in a yellow ink but also in inks of any other colors, such as a black ink and a red ink.

As the magenta color dye, compounds having the structures represented by formula (3) or (4), as described in JP-A-2002-114930, are preferable; and specific examples thereof include the compounds described in JP-A-2002-114930, paragraph Nos. [0054] to [0073].

Examples of a particularly preferable dye include the azo dyes represented by any of formulae (M-1) to (M-2), as described in JP-A-2002-121414, paragraph Nos. [0084] to [0122], and specific examples thereof include the compounds described in JP-A-2002-121414, paragraph Nos. [0123] to [0132]. The oil-soluble dyes represented by any of formulae (3), (4), and (M-1) to (M-2) described in the aforementioned publication may be used not only in a magenta ink but also in inks of any other colors, such as a black ink and a red ink.

As the cyan color dye, preferable examples include the dyes represented by any of formulae (I) to (IV), as described in JP-A-2001-181547, and the dyes represented by any of formulae (IV-1) to (IV-4), as described in JP-A-2002-121414, paragraph Nos. [0063] to [0078]; and specific examples thereof include the compounds as described in JP-A-2001-181547, paragraph Nos. [0052] to [0066], and in JP-A-2002-121414, paragraph Nos. [0079] to [0081].

Examples of a particularly preferable dye include the phthalocyanine dyes represented by formula (C-I) or (C-II), as described in JP-A-2002-121414, paragraph Nos. [0133] to [0196]; and further preferably the phthalocyanine dyes represented by formula (C-II). Specific examples thereof include the compounds described in JP-A-2002-121414, paragraph Nos. [0198] to [0201]. The oil-soluble dyes represented by any of formulae (I) to (IV), (IV-1) to (IV-4), (C-I), and (C-II) may be used not only in a cyan ink but also in inks of any other colors, such as a black ink and a green ink.

### -Oxidation potential-

The value of oxidation potential (Eox) of the dye that can be used in the present invention, can be readily measured by one skilled in the art. Methods for measuring the oxidation potential are described, for example, by P. Delahay, "New Instrumental Methods in Electrochemistry," 1954, Interscience Publishers; A. J. Bard, et al., "Electrochemical Methods," 1980, John Wiley & Sons; Akira Fujishima, et al., "Denki Kagaku Sokutei-ho", 1984, Gihodo Shuppan Co., Ltd.

Specifically, the oxidation potential is determined by: dissolving a test sample at a concentration of 1×10⁻² to 1×10⁻⁶ mole/liter, in a solvent, such as dimethylformamide or acetonitrile, containing a supporting electrolyte, such as sodium perchlorate or tetrapropylammonium perchlorate; sweeping or applying a voltage to the oxidation side (in the noble direction) in a voltammeter, by using carbon (GC) as a working electrode and a revolving platinum electrode as a counter electrode, thereby to obtain an oxidation wave; approximating the thus-obtained oxidation wave to a straight line; determining the intersection point between the straight line and the residual current/potential line, and the intersection point between the straight line and the saturated current line (or, the intersection point between the straight line and a straight line in parallel with the vertical axis passing through the peak electric potential); and determining the target oxidation voltage vs. SCE (saturated calomel electrode) at the center potential value of the line segment connecting the two intersection points. The value may deviate to an extent approximately of several dozen millivolts, under the influence of the difference in the voltage between liquids and the resistivity of the sample solution, but it is possible to assure the reproducibility of the electric potential by using a standard sample (e.g., hydroquinone). The supporting electrolyte and solvent to be used may be selected appropriately, according to the oxidation potential and solubility of the test sample. The supporting electrolyte and solvent that can be used are described by Akira Fujishima et al., in "Electrochemical Measurement Methods" (1984, Gihodo Shuppan), pp. 101 to 118.

An oxidation potential at the non-association state is obtained, within the above concentration range of the phthalocyanine compound sample in the solvent for measurement.

The value Eox represents the easiness of electron transfer from sample to electrode, and a greater value (higher oxidation potential) indicates that the electron transfer from sample to electrode is more difficult, or in other words it is difficult to oxidize the sample.

The colorant is preferably added to the ink composition in an amount of 0.05 to 20 mass%, more preferably 0.2 to 10 mass%, to the total mass of the ink composition. When an oil-soluble dye is used as the colorant, the content thereof is particularly preferably 0.2 to 6 mass%, to the total mass (including a solvent(s)) of the ink composition.

### (Additives)

In the ink composition of the present invention, any of various additives may be additionally used, in addition to the essential components, according to the purposes. These additional (optional) components will be described below.

### -Sensitizing dye-

In the present invention, a sensitizing dye may be added, for improving sensitivity of the photopolymerization initiator, in addition to the anthracene compound. Hereinafter, the sensitizing dye will be described.

Examples of the sensitizing dye according to the present invention include those having an absorption wavelength within a wavelength range of 350 nm to 450 nm and belonging to the compounds enumerated below: for example, polynuclear aromatic compounds (e.g., pyrene, perylene, triphenylene, 2-ethyl-9,10-dimethoxyanthracene, etc.) xanthenes (e.g., fluorescein, eosin, erythrocin, rhodamine B, rose bengal, etc.), cyanines (e.g., thiacarbocyanine, oxacarbocyanine, etc.), merocyanines (e.g., merocyanine, carbomerocyanine, etc.), thiazines (e.g., thionine, methylene blue, toluidine blue, etc.), acridines (e.g., acridine orange, chloroflavine, acriflavine, etc.), anthraquinones (e.g., anthraquinone, etc.), squaliums (e.g., squalium, etc.), coumarins (e.g., 7-diethylamino-4-methyl coumarin, etc.).

Preferable examples of the sensitizing dye that can be used in the present invention include the compounds represented by any of formulae (vi) to (x).

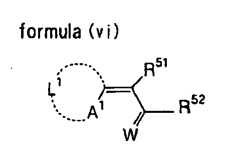

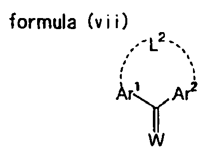

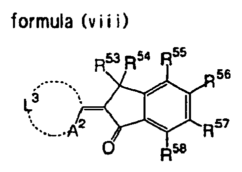

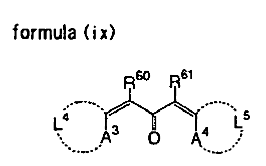

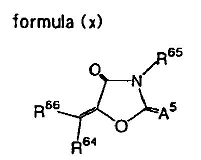

In formula (vi), A¹ represents a sulfur atom or NR⁵⁰, in which R⁵⁰ represents an alkyl group or an aryl group. L¹ represents a group of non-metal atoms for forming a basic colorant nucleus together with the neighboring A¹ and neighboring carbon atoms. R⁵¹ and R⁵² each independently represent a hydrogen atom or a group of monovalent non-metal atoms, and R⁵¹ and R⁵² may bond together, to form an acidic colorant nucleus. W represents an oxygen atom or a sulfur atom.

In formula (vii), Ar¹ and Ar² each independently represent an aryl group, and are connected to each other via the linkage via L². L² represents -O- or -S-. W has the same meaning as in formula (vi).

In formula (viii), A² represents a sulfur atom or NR⁵⁹, in which R⁵⁹ represents an alkyl group or an aryl group. L³ represents a group of non-metal atoms for forming a basic colorant nucleus together with the neighboring A² and carbon atoms. R⁵³, R⁵⁴, R⁵⁵, R⁵⁶, R⁵⁷ and R⁵⁸ each independently represent a group of monovalent non-metal atoms.

In formula (ix), A³ and A⁴ each independently represent -S-, -NR⁶²-, or -NR⁶³-, in which R⁶² and R⁶³ each independently represent a substituted or unsubstituted alkyl group or a substituted or unsubstituted aryl group. L⁴ and L⁵ each independently represent a group of non-metal atoms for forming a basic colorant nucleus together with the neighboring A³ or A⁴ and carbon atoms. R⁶⁰ and R⁶¹ each independently represent a hydrogen atom or a group of monovalent non-metal atoms, and R⁶⁰ and R⁶¹ may bond together, to form an aliphatic or aromatic ring.

In formula (x), R⁶⁶ represents an aromatic ring or a hetero ring, each of which may be substituted. A⁵ represents an oxygen atom, a sulfur atom, or NR⁶⁷-. R⁶⁴, R⁶⁵ and R⁶⁷ each independently represent a hydrogen atom or a group of monovalent non-metal atoms. R⁶⁷ and R⁶⁴ or R⁶⁵ and R⁶⁷ may bond together, to form an aliphatic or aromatic ring.

Specific preferable examples of the compound represented by any of the formulae (vi) to (x) are listed below, but the invention is not limited to those.

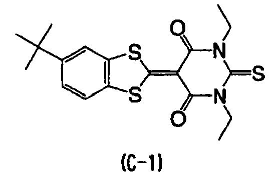

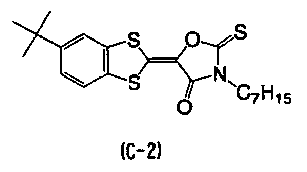

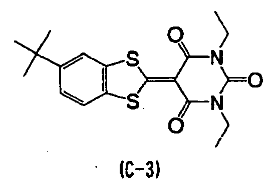

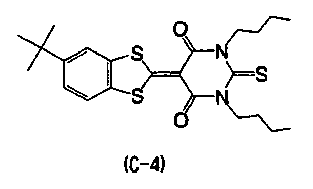

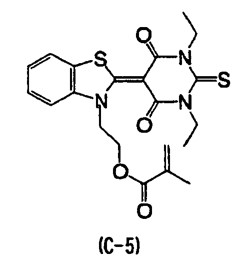

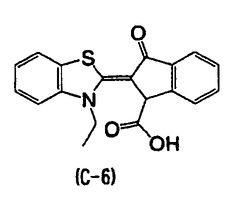

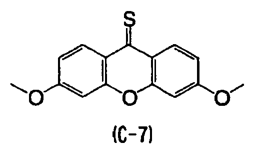

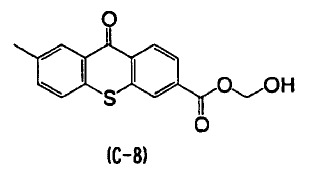

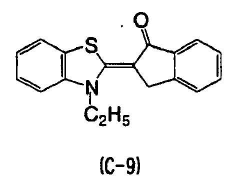

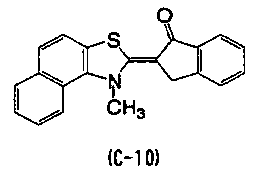

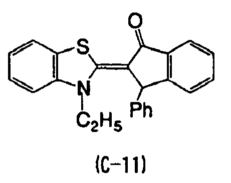

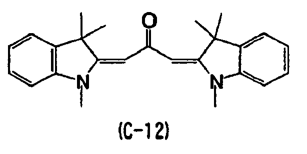

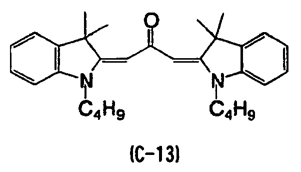

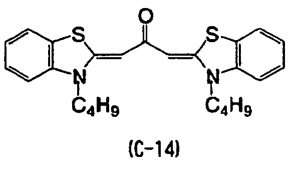

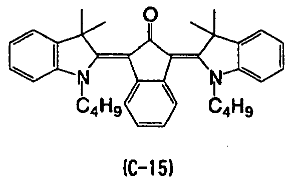

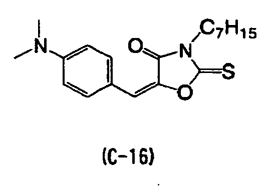

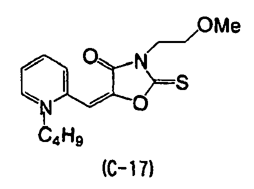

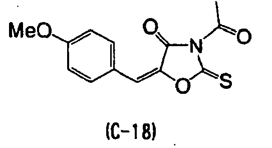

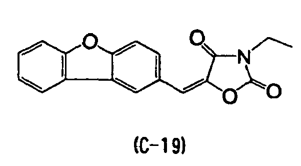

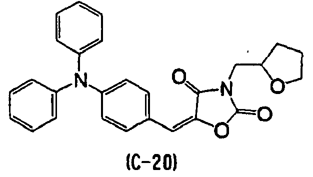

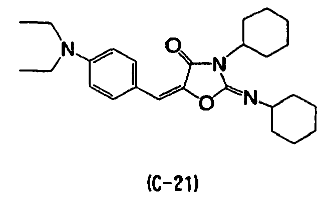

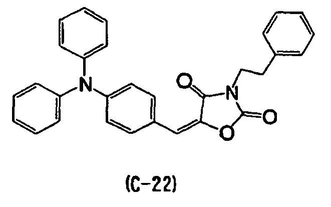

The sensitizing dye in the ink composition of the present invention is preferably added in an amount within the range of 0.01 to 20 mass%, more preferably 0.1 to 15 mass%, and further preferably 0.5 to 10 mass%, to the total mass of the ink composition, from the viewpoint of dying (coloring) property of the ink.

The sensitizing dye may be used singly or in combination of two or more kinds thereof.

The content ratio a/c of the sensitizing dye to the photopolymerization initiator in ink composition is preferably 100 to 0.5, more preferably 50 to 1, and further preferably 10 to 1.5, in terms of mass ratio, from the viewpoints of the enhanced decomposition rate of the photopolymerization initiator and the transmittance of the irradiated light.

### -Co-sensitizer-

To the ink composition of the present invention, as a co-sensitizer, a known compound may additionally be added, which has such a function to further improve sensitivity or/and prevent polymerization inhibition by oxygen.

Examples of the co-sensitizer include amines, for examples compounds described by M. R. Sander et al., "Journal of Polymer Society", Vol. 10, page 3173, 1972, JP-B-44-20189, JP-A-51-82102, JP-A-52-134692, JP-A-59-138205, JP-A-60-84305, JP-A-62-18537, JP-A-64-33104, and Research Disclosure No. 33825. Specific examples of the compounds include triethanolamine, p-dimethylaminobenzoic acid ethyl ester, p-formyldimetylaniline, and p-methylthiodimethylaniline.

Other examples of the co-sensitizer include thiols and sulfides, e.g. thiol compounds as described, for example, in JP-A-53-702, JP-B-55-500806 and JP-A-5-142772, and disulfide compounds as described, for example, in JP-A-56-75643. Specific examples of the compounds include 2-mercaptobenzothiazole, 2-mercaptobenzoxazole, 2-mercaptobenzoimidazole, 2-mercapto-4(3H)-quinazoline, and β-mercaptonaphthalene.

Still other examples of the co-sensitizer include amino acid compounds (e.g., N-phenylglycine), organometallic compounds as described in JP-B-48-42965 (e.g., tributyltin acetate), hydrogen donors as described in JP-B-55-34414, sulfur compounds as described in JP-A-6-308727 (e.g., triathine), phosphorus compounds as described in JP-A-6-250387 (e.g., diethyl phosphite), and Si-H or Ge-H compounds as described in Japanese Patent Application No. 6-191605.

The addition amount of the co-sensitizer is selected appropriately according to the purposes, and it is generally approximately 0.01 to 10 mass%, to the total amount (total mass) of the ink composition.

### -Polymerization inhibitor -

The ink composition of the present invention may contain at least one polymerization inhibitor.

Preferable examples of the polymerization inhibitor include any compound(s) selected from the group consisting of phenol-series hydroxyl group-containing compounds, quinones, N-oxide compounds, piperidin-1-oxyl free radical compounds, pyrrolidin-1-oxyl free radical compounds, N-nitrosophenylhydroxylamines, and cationic dyes.

Specific examples thereof include hydroquinone, p-methoxyphenol, di-t-butyl-p-cresol, pyrogallol, resorcinol, catechol, t-butylcatechol, hydroquinone monoalkyl ethers (such as hydroquinone monomethyl ether, and hydroquinone monobutyl ether), benzoquinone, 4,4-thiobis(3-methyl-6-t-butylphenol), 2,2'-methylene-bis(4-methyl-6-t-butylphenol), 2,2,6,6-tetramethylpiperidine and the derivatives thereof, di-t-butyl nitroxide, 2,2,6,6-tetramethylpiperidine-N-oxide and the derivatives thereof, piperidin-1-oxyl free-radical, 2,2,6,6-tetramethylpiperidin-1-oxyl free radical, 4-oxo-2,2,6,6-tetramethylpiperidin-1-oxyl free radical, 4-hydroxy-2,2,6,6-tetramethylpiperidin-1-oxyl free radical, 4-acetamido-2,2,6,6-tetramethylpiperidin-1-oxyl free radical, 4-maleimido-2,2,6,6-tetramethylpiperidin-1-oxyl free radical, 4-phosphonoxy-2,2,6,6-tetramethylpiperidin-1-oxyl free radical, 3-carboxy-2,2,5,5-tetramethylpyrrolidin-1-oxyl free radical, N-nitrosophenylhydroxylamine cerous salt, N-nitrosophenylhydroxylamine aluminum salt, crystal violet, methyl violet, ethyl violet, and Victoria Pure Blue BOH.

Of these compounds, hydroquinone monoalkyl ethers, such as hydroquinone monomethyl ether, and hydroquinone monobutyl ether; and hindered phenols, such as 4,4'-thiobis(-3-methyl-6-t-butylphenol), and 2,2'-methylene bis(4-methyl-6-t-butylphenol), are preferable.

The content of the polymerization inhibitor in ink composition is preferably 50 to 30,000 ppm, more preferably 100 to 10,000 ppm, and further preferably 100 to 3,000 ppm, to the total amount (total mass) of the ink composition.

### -Ultraviolet absorbent-

To the ink composition of the present invention, an ultraviolet absorbent may be added, to improve weather fastness and prevention of discoloration of the image obtained.

Examples of the ultraviolet absorber include so-called fluorescent whitening agents, which are compounds capable of absorbing ultraviolet ray to emit fluorescence, typical examples thereof include compounds as described in Research Disclosure No. 24239, stilbene-series compounds, benzoxazole-series compounds, benzotriazole-series compounds as described in, for example, JP-A-58-185677, JP-A-61-190537, JP-A-2-782, JP-A-5-197075, and JP-A-9-34057, benzophenone-series compounds as described in, for example, JP-A-46-2784, JP-A-5-194483, and U.S. Patent No. 3,214,463, cinnamic acid-series compounds as described in, for example, JP-B-48-30492, JP-B-56-21141, and JP-A-10-88106, and triazine-series compounds as described in, for example, JP-A-4-298503, JP-A-8-53427, JP-A-8-239368, JP-A-10-182621, and JP-T-8-50129 ("JP-T" means published searched patent publication).

The addition amount of the ultraviolet absorber may be determined appropriately according to the purposes, and it is generally approximately 0.01 to 10 mass%, to the total amount (total mass) of the ink composition.

### -Antioxidant -

To the ink composition of the present invention, an antioxidant may be added to improve stability. Examples of the antioxidant include those described, for example, in European Patent Publications (Laid-Open) Nos. 223739, 309401, 309402, 310551, 310552, and 459416, German Patent Publications (Laid-Open) No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and U.S. Patent Nos. 4,814,262 and 4,980,275.

The addition amount of the antioxidant may be determined appropriately according to the purposes, and it is generally approximately 0.01 to 10 mass%, to the total amount (total mass) of the ink composition.

### -Discoloration inhibitor (anti-fading agent)-

In the ink composition of the present invention, any one of various organic- or metal complex-series discoloration inhibitors may be used. Examples of the organic anti-fading agent include hydroquinones, alkoxyphenols, dialkoxyphenols, phenols, anilines, amines, indans, chromans, alkoxyanilines, and heterocyclic compounds. Examples of the anti-fading metal complex agents include nickel complexes, and zinc complexes. More specific examples of the anti-fading agent that can be used include compounds, as described in patent documents cited in Research Disclosure, No. 17643, Items VII-I to J, ibid., No. 15162, ibid., No. 18716, page 650, left column, ibid., No. 36544, page 527, ibid., No. 307105, page 872, and ibid., No. 15162; and compounds included in compound examples and formulae of typical compounds, as described in JP-A-62-215272, pages 127 to 137.

The addition amount of the anti-fading agent may be determined appropriately according to the purposes, and it is generally approximately 0.01 to 10 mass%, to the total amount (total mass) of the ink composition.

### -Conductive salts-

To the ink composition of the present invention, a conductive salt, such as potassium thiocyanate, lithium nitrate, ammonium thiocyanate, or dimethylamine hydrochloride, may be added, for controlling the physical properties of the ink ejected.

### -Solvent -

To the ink composition of the present invention, addition of an extremely small amount of an organic solvent is also effective, for improving adhesiveness to the recording material or medium.

Examples of the solvent include ketone-series solvents, such as acetone, methyl ethyl ketone, and diethyl ketone; alcohol-series solvents, such as methanol, ethanol, 2-propanol, 1-propanol, 1-butanol, and tert-butanol; chlorine-containing solvents, such as chloroform, and methylene chloride; aromatic-series solvents, such as benzene, and toluene; ester-series solvents, such as ethyl acetate, butyl acetate, and isopropyl acetate; ether-series solvents, such as diethyl ether, tetrahydrofuran, and dioxane; and glycol ether-series solvents, such as ethylene glycol monomethyl ether, and ethylene glycol dimethyl ether.

In such a case, the amount of the solvent to be added is effectively within the range that does not cause problems of VOCs and deterioration in solvent resistance, and thus the amount is preferably within the range of 0.1 to 5 mass%, more preferably 0.1 to 3 mass%, to the entire ink composition.

### -Polymer compound -

To the ink composition of the present invention, any of various polymer compounds may be added, for adjusting film physical properties. Examples of the polymer compound that can be used include acrylic polymers, polyvinylbutyral resins, polyurethane resins, polyamide resins, polyester resins, epoxy resins, phenol resins, polycarbonate resins, polyvinylbutyral resins, polyvinyl formal resins, shellac, vinyl resins, acrylic resins, rubber-based resins, waxes, and other natural resins. These resins may be used in combination of two or more. Among them, vinyl-series copolymers obtained by copolymerization of an acrylic monomer are preferable. Further, as a copolymerization component for the polymer binding material, use may also be preferably made of a copolymer containing a "carboxyl group-containing monomer", an "alkyl methacrylate ester", or an "alkyl acrylate ester" as a structural unit.

To the ink composition of the present invention, any of other additives may be added as needed, such as a leveling additive, a matting agent, a wax for adjusting film physical properties, and a non-polymerization-inhibiting tackifier for improving adhesiveness to a recording medium such as PET or polyolefins.

Specific examples of the tackifier include high-molecular-weight tackiness polymers as described in JP-A-2001-49200, p.5 to 6 (e.g., copolymers composed of an ester of (meth)acrylic acid and an alcohol having an alkyl group having 1 to 20 carbon atoms, an ester of (meth)acrylic acid and an alicyclic alcohol having 3 to 14 carbon atoms, or an ester of (meth)acrylic acid and an aromatic alcohol having 6 to 14 carbon atoms); and low-molecular-weight tackiness-providing resins containing polymerizable unsaturated bonds.

### (Preferable physical properties of ink composition)

Considering ejection efficiency, the ink viscosity of the ink composition of the present invention, when applied for ink-jet recording, is preferably 5 to 30 mPa·s, more preferably 7 to 20 mPa·s, at the ejection temperature. Thus, it is preferable to adjust and determine the composition appropriately to make the viscosity within the range above.

The viscosity of the ink composition at room temperature (25 to 30°C) is preferably 7 to 120 mPa·s and more preferably 10 to 80 mPa·s. By increasing the viscosity at room temperature, it becomes possible to prevent penetration of the ink into a recording material even when a porous recording material is used, and also to reduce the amount of uncured monomer and odor, and further to suppress ink-dot bleeding when an ink droplet is ejected, and consequently to improve the image quality.

The surface tension of the ink composition of the present invention is preferably 20 to 40 mN/m and more preferably 20 to 30 mN/m. When the ink composition of the present invention is utilized to record on various recording media composed, for example, of polyolefin, PET, coated paper, or non-coated paper, the surface tension thereof is preferably 20 mN/m or more for prevention of ink bleeding and penetration, and 30 mN/m or less for improvement in wetability.

The ink composition of the present invention can be preferably used as an ink-jet recording ink. The inkjet-recording method is not particularly limited, and may be, for example, an electric charge-control method of ejecting ink by electrostatic attraction, a drop-on-demand method (pressure pulse method) of using the vibrational pressure of a piezoelectric device, an acoustic inkjet method of ejecting ink by converting electrical signals into acoustic beams, irradiating the beams on ink, and generating an acoustic radiation pressure in the ink, or a thermal inkjet method of forming air bubbles by heating ink and using the pressure generated. Examples of the inkjet-recording method further include a method of ejecting a so-called photo ink, which is low in concentration, multiple times in droplets in smaller volume; a method of improving image quality, by using multiple inks that are substantially the same in color hue but different in concentration; and a method of using a transparent and colorless ink.

Among the above, the ink composition of the present invention is preferable as an ink for ink-jet recoding by a drop-on-demand system (pressure pulse system) using an piezoelectric device.

### <Image-forming method and recorded material>

The ink composition of the present invention can be used, for example, in an image-forming method comprising: an image-recording step to record an image on a recording material by the ink-jet recording method of ejecting the ink composition of the present invention; or, in an image-forming method comprising: an image-printing step to print an image on a recording material by using the ink composition of the present invention, and an image-curing step to cure the image thus-printed on the recording material in the image-printing step, by irradiation of high-energy ray (active ray).

In other words, the image-forming method of the present invention may be a method consisting of an image-recording step to form an image by ink-jet recording; or alternatively a method in which the aforementioned method is in combination with an image-curing step. Further, the image-forming method of the present invention may be a method of recording an image in the image-recording step by a method other than ink-jet recording, in combination with the image-curing step.

In the image-curing step according to the present invention, it is possible to form a favorably cured image high in fastness, because, after printing an image on a recording material in the image-printing step, the polymerizable compound, which contributes in imaging, is polymerized and cured progressively, by irradiation of the printed image with high-energy ray in the image-curing step.

In the image-curing step, it is possible to conduct exposure to accelerate polymerization and curing of the ink composition, by using a light source that emits a high-energy ray having a wavelength region within the range corresponding to the sensitive wavelength of the ink composition. The light source, exposure time period, and light intensity may be selected appropriately, according to the degree of polymerization curing of the polymerizable compound according to the present invention.

The thickness of the image cured in the image-curing step is preferably 2 to 30 µm. The "thickness of an image" means a thickness of a cured product obtained by curing an image which has been formed with the ink composition. By making the thickness of the image within the range of 2 to 30 µm, it is possible to express any images at from a low density to a high density.

In the image-curing step, it is possible to conduct exposure to accelerate polymerization and curing of the ink composition, by using a light source that emits a high-energy ray having a wavelength region within the range corresponding to the sensitive wavelength of the ink composition. Specifically, it is possible to perform the irradiation preferably by using a light source to emit an active ray in a wavelength range of generally 250 to 450 mm, preferably 365±20 nm, such as LD, LED (light-emitting diodes), fluorescent lamp, low-pressure mercury lamp, high-pressure mercury lamp, metal halide lamp, carbon arc lamp, xenon lamp, or chemical lamp. Preferable examples of the light source include LEDs, high-pressure mercury lamps, and metal halide lamps.

In the case of curing by radical polymerization, it is preferable to cure the ink composition at low energy consumption, by exposing it in a low-oxygen concentration state, i.e., in an (inert) gas atmosphere such as of nitrogen, because oxygen inhibits polymerization.

The recorded material thus-obtained by using the ink is cured in the image region by irradiation of ultraviolet ray or the like, and the image region is excellent in strength, and thus, the recorded material may be also used, for example, as the ink-receiving layer (image region) of planographic printing plate.

In the recording/printing step, it is preferable to use the inkjet-recording method by an inkjet printer. Specifically, in the image-recording/printing step, the image is preferably recorded/printed by the inkjet recording method above of ejecting the ink composition.

### (Inkjet-recording method and inkjet-recording apparatus)

Hereinafter, descriptions will be given with respect to the inkjet-recording method and inkjet-recording apparatus, each of which can be preferably used in the image-recording method of the present invention.

### - System

An example of the ink-jet recording system for ejecting ink can be a mode as described in JP-A-2002-11860, but the invention is not limited thereto or may utilize another mode.

### - Ink-holding means

The ink-holding means is preferably a known ink cartridge to fill the ink, and may be the tank placed in a deformable container, as disclosed in JP-A-5-16377. Use of a sub-tank, as disclosed in JP-A-5-16382, stabilizes supply of the ink to an ink head more efficiently. Further, as disclosed in JP-A-8-174860, it is also possible to use a cartridge of a mode to supply ink, by movement of a valve, when the pressure in an ink-supplying chamber declines. Preferable as the method of applying negative pressure to keep the meniscus in the head of the ink-holding means properly, is a method of using the height or head pressure of the ink-holding means, a method of using the capillary force by the filter installed in the ink channel (ink flow pass), a method of controlling the pressure by a pump or the like; or a method of holding an ink in an ink-absorber, and applying a negative pressure by the capillary force of the adsorbent for the ink, as disclosed in JP-A-50-74341.

### - Ink-supplying channel

As a method of supplying the ink from the ink-holding means to a head, the ink-holding means may be connected directly or indirectly via an additional channel, such as a tube, to the head unit. The ink-holding means and channel are preferably made of a material which has a preferable wetability to the ink, or the ink-holding means and channel is preferably surface-treated.

### - Head

The ink may be ejected, for example, by the method of ejecting ink droplets continuously, and selectively controlling the droplets to reach or not to reach to a recording material, while deflecting the droplet direction according to the desired image, as disclosed in JP-A-5-104725; or by a so-called on-demand method of ejecting ink droplets only in the region needed for the image. The on-demand method may be the method of ejecting ink, by generating an ink pressure by deformation of a structure by using a piezoelectric device or the like, as disclosed in JP-A-5-16349; or the method of ejecting ink by the pressure caused by expansion of the ink by vaporization by the supplied heat energy, as disclosed in JP-A-1-234255. Alternatively, it may be a method of controlling ejection of ink on a recording material under an electric field, as disclosed in JP-A-2001-277466.

In the inkjet-recording method, an image is recorded on a recording material by using the ink composition of the present invention, and the ink-ejecting nozzle and others used at that time are not particularly limited and selected appropriately according to the purposes. Nozzles similar to the mode as described, for example, in JP-A-5-31908, are applicable. The nozzles may be arranged in multiple lines, as described in JP-A-2002-316420, to eject multiple color inks, and thus, it is possible to form a color image at a high speed by using such nozzles, and even faster by installing multiple head units each having nozzles in multiple lines.

It is possible to form an image at high speed, by placing multiple nozzles covering the width equivalent or wider than that of the image, i.e., preparing a so-called line head and conveying the recording material simultaneously with ink ejection form these nozzles, as described in JP-A-63-160849.

Further, it is possible to prevent adhesion of the ink droplet or adhesion of a portion of the ink droplet on the nozzle surface, by treating the surface of the nozzles in a manner similar to that disclosed in JP-A-5-116327.

The nozzles often become stained even if surface-treated as described above, and thus, it is preferable to clean the nozzles with a blade, as disclosed in JP-A-6-71904.

The inks in various colors may not necessarily be ejected from nozzles in the same amount, and even a particular ink may not be ejected at all for a long period of time. In such a case, it is preferable to keep the physical properties of ink in the range preferable for stabilizing the meniscus, by ejecting the ink as needed on the region outside the image region and re-supplying new ink into the head, as disclosed in JP-A-11-157102.

Even such treatment may result in penetration or generation of air bubbles in the head. In such a case, it is possible to dispose the ink deteriorated in physical properties and also to discharge the bubbles therein to the outside of the head, by withdrawing (aspiration of) the ink compulsory from the outside of the head, as described in JP-A-11-334092. When no ink is ejected for an extended period of time, it is possible to protect the nozzle surface by covering the nozzle surface with a cap, as disclosed in JP-A-11-138830. Further, there may be occasional failure in ink ejection even with these measures.

Image printing in the state where no ink is ejected from some of the nozzles leads to troubles such as unevenness of image. For prevention of the troubles, it is effective to take a measure to detect ink ejection failure, as disclosed in JP-A-2000-343686.

Superimposed ink ejection, which is made such that the head unit is moved in one direction and the recording material is synchronizedly moved intermittently in the direction perpendicular to the head movement, as described in JP-A-6-115099, is effective in overcoming or obfuscating the unevenness of image due to a low accuracy accompanied by intermittent movement of the recording material, and thus, in providing a high-quality image. It is possible, then, to set the relationship between the image quality and the recording speed in a suitable range, by properly determining the relationship among the moving speed of head, the moving distance of recording material, and the number of nozzles.

Alternatively, it is also possible to obtain similar effects, by fixing the head, mechanically moving the recording material reciprocally in a certain direction and intermittently in the direction perpendicular thereto.

### - Temperature control

The inkjet-recording apparatus preferably has a means for stabilizing the temperature of the ink composition, and the area where the temperature is controlled constant covers the entire piping system and units from the ink tank (or an intermediate tank, if present) to the nozzle injection face.

In the inkjet-recording method, it is preferable to eject ink after the viscosity of the ink composition is decreased to generally 30 mPa·s or less, preferably 20 mPa·s or less, by heating the ink composition to 40 to 80°C, and in this way, it is possible to obtain higher injection stability. Radiation-curable ink compositions are, generally, higher in viscosity than aqueous inks, and thus, the fluctuation in the viscosity of the ink compositions due to fluctuation of temperature during printing is greater. The fluctuation in the viscosity of the ink composition exerts a significant influence on the droplet size and droplet injection speed and leads to deterioration in image quality, and thus, it is quite preferable to keep the ink composition temperature as constant as possible during printing. For that purpose, the inkjet-recording apparatus preferably has an ink temperature-detecting means, an ink-heating means, as well as a control means of controlling the (heating) temperature of the ink composition according to the ink temperature detected.

The method of controlling the temperature is not particularly limited, and, for example, it is preferable to heat and control the temperature properly, according to the flow rate of ink composition and the environment temperature, which are monitored by temperature sensors installed in pipings or the like. Further, the head unit to be heated is preferably thermally blocked or insulated, for prevention of the environmental temperature influence to the apparatus body. It is preferable to insulate the apparatus body from other units and reduce the heat capacity of the entire heating unit, for shortening the printer start-up time needed for heating or for reducing the loss in heat energy.

Alternatively, the inkjet-recording apparatus may preferably have a means of controlling the energy applied to the means of ejecting ink according to the ink temperature.

The control width of the ink composition temperature is preferably within the range of the set temperature ±5°C, more preferably the set temperature ±2°C, and further preferably the set temperature ±1°C.

### - Exposure to light

Examples of the light source that can be used include, as mentioned in the above, commonly-used mercury lamp, and metal halide lamp, as well as light-emitting diode, semiconductor laser, and fluorescent lamp. Further, light sources and electromagnetic waves that induce polymerization reaction of the ink, such as hot-cathode tube, cold-cathode tube, electron beam, and X ray, may also be used.

When a metal halide lamp is used, the lamp preferably has an output of 10 to 1,000 W/cm, and the illuminance on the recording material surface is preferably 1 mW/cm² to 100 W/cm².

Alternatively, when a high-pressure mercury lamp, metal halide lamp, or the like is used, it is preferable to install a ventilation means to exhaust ozone generated in associated with electric discharge. The ventilation means is preferably arranged to function also as a means of recovering the ink mist generated during ink ejection.

Next, preferable condition of irradiating the high-energy ray will be described. A basic irradiation method is disclosed in JP-A-60-132767. Specifically, each side of a head unit is provided with a light source, and the irradiation is conducted in a shuttle system by moving (scanning) the head and light sources. The active radiation ray is to be irradiated after a certain period of time from the ejected ink reached onto the recording medium. Further, the ink may be cured with a light from another fixed light source. WO 99/54415 discloses, as an irradiation method, a method of using optical fiber; and a method of irradiating the recorded area with a collimated UV ray, i.e., a collimated light from the light source reflected from a mirror placed on the side face of head unit. In the present invention, any of these irradiation methods may be used.

Irradiation of the high-energy ray for curing on the ink-ejecting nozzle may lead to solidification of the ink mist and the like deposited on the nozzle-face surface and disturbance of ink ejection; and thus, it is preferable to take measures, such as shading, to minimize irradiation on the nozzle. Specifically, it is preferable, for example, to install a barrier wall for prevention of the irradiation on nozzle plate, or a means to limit the incident angle toward the recording material for reduction of stray light.

Further, in the present invention, it is preferable to set the period of time from reaching of the ejected ink droplet onto the recording medium to starting irradiation to be 0.01 to 0.5 second, more preferably 0.01 to 0.3 second, and further preferably 0.01 to 0.15 second, which means after the aforementioned time period an active ray is to irradiate. By controlling the time period from ejection/reaching to irradiation within an extremely short period of time, it becomes possible to prevent ink bleeding before curing of the ejected ink reached onto the recording material surface. It is also possible to irradiate (expose to light) an ink composition before penetration thereof into the depth in a porous recording material to which no light is reachable, and to suppress or reduce the amount of residual unreacted monomer, and consequently to reduce the amount of odor. The combination use of the inkjet-recording method described above and the ink composition of the present invention, provides a great synergic effect. By using such a recording method, it is possible to keep the dot diameter of ejected/reached ink droplet constant and to improve image quality, even on various recording media different in surface wetability.

### - System parameter

In forming an image, the diameter of the ink droplet reached on the recording material is preferably within the range from 10 to 500 µm, and the diameter of the ink droplet upon ejected from the nozzle is preferably within the range from 5 to 250 µm, and the nozzle diameter is preferably within the range from 15 to 100 µm for that purpose.

In order to form a certain image, the number of pixels per inch is preferably 50 to 2,400 dpi, and the nozzle density of the head is preferably 10 to 2,400 dpi, for that purpose. Even when the nozzle density of the head is low, it is possible to realize a high-density droplets reached on the recording material, by using a head having a large nozzle gap, by placing the heat unit inclined to the traveling direction of the recording material or by placing multiple head units staggered from each other. As described above, it is also possible to record a high-density image, by conveying the recording material to a certain distance, after each movement of the head at a low nozzle pitch, by moving the head or recording material reciprocally and bringing the ejected ink droplets reach on different positions.

The amount of the ink droplet ejected and reached on the recording material is preferably adjusted to an appropriate amount within the range of from 0.05 to 25 g/m² for expressing favorable gradation, and it is preferable to control the size and/or number (quantity) of ink droplets ejected from the head for that purpose.

When the distance between the head and the recording material is too large, air flow associated with movement of the head or recording material disturbs proper flying of the ejected ink droplet, leading to deterioration in the positional accuracy of the ink droplet reaching on the recording material. On the other hand, when the distance is too small, the head and the recording material may be brought into contact with each other, due to surface irregularity of recording material, vibration of a conveyer mechanism, or another reason. Thus, the distance is preferably kept approximately in the range of 0.5 to 2 mm.

### - Ink set

The ink that can be used may be a single color; or the ink may be/have any one, two, or three color(s) of cyan, magenta, and yellow; or the ink may have four colors including black in addition to the above three colors; or the ink may have another color, as called a particular color, other than the above. The colorant may be a dye or a pigment. The order of ejecting these inks is not particularly limited, and the inks may be ejected so that the ink droplets would reach in the order of lightness from the ink lowest in lightness to the ink highest in lightness, or alternatively from highest to lowest in lightness, but it is preferable to eject the inks in the order preferable on the image-recording quality.

When the inks are ejected to superimpose in the order of lightness from the highest in color of lightness to the lowest, the high-energy ray easily reaches to the ink at a lower position, thereby causing less inhibition or deterioration in curing sensitivity, less increase in the amount of residual monomer and occurrence of odor, and less deterioration in adhesiveness. Irradiation may be performed after all color inks are ejected to expose at one time, but it is preferable to expose each color ink to light after each ejection, from the viewpoints of acceleration of curing.

The image signal to be recorded is preferably processed for more favorable color reproduction, for example, as described in JP-A-6-210905.

In addition to the ink-jet recording application, the ink composition of the present invention may be used in various applications, such as three-dimensional molding, can printing, and food packaging. For these applications, any of known image-forming methods may be used, and reference can be made, for example, to the description in Japanese Patent No. 2679586.

### [Recording material]

Each of ink-permeable recording medium and ink non-permeable recording medium may be used as the recording medium on which an image is recorded by using the ink composition of the present invention. Examples of the ink-permeable recording medium include plain paper, inkjet paper, coated paper, electrophotographic common-use paper, fabric, nonwoven fabric, porous film, and polymer absorbent. These recording media are described as "recording medium", for example, in JP-A-2001-1891549.

Examples the ink non-permeable recording medium include art paper, synthetic resin, rubber, resin-coated paper, glass, metal, ceramics, and wood. Further, a base material which is a combination of these materials to composite may be used, for giving the recoded medium an additional function.

The synthetic resin that can be used may be any of synthetic resins, and examples thereof include polyester resins, such as polyethylene terephthalate, and polybutadiene terephthalate; polyolefin resins, such as polyvinyl chloride, polystyrene, polyethylene, polyurethane, and polypropylene; and acrylic resins, polycarbonates, acrylonitrile/butadiene/styrene copolymers, diacetates, triacetates, polyimides, cellophane, and Celluloid (trade name).

The shape (thickness) of the base material utilizing synthetic-resin is not particularly limited, and can be determined appropriately according to the purposed, and the shape may, for example, be film-, card-, or block-shaped. Further, the synthetic resin may be transparent or opaque. In a preferable embodiment, the synthetic resin is used in a film or sheet shape for so-called soft packaging, and various non-absorptive plastics and the films thereof may be used. Examples of the various plastic films include PET film, OPS film, OPP film, ONy film, PVC film, PE film, and TAC film.

Examples of the resin-coated paper include transparent polyester film, opaque polyester film, opaque polyolefin resin film, and, paper supports in which each face of a paper is laminated with a polyolefin resin; and paper supports in which each face of a paper is laminated with a polyolefin resin are particularly preferable.

As described above, according to the image recording by using the ink composition of the present invention, it is possible to obtain an image high in sensitivity, and excellent in curing property, and the recorded material thus obtained, i.e., the recorded material of the present invention, is excellent in curing property, and has sufficient resistance against abrasion or scratching.

According to the present invention, an ink composition that allows polymerization curing of the composition after recording/printing, by irradiation to the ink composition with high-energy ray, can be provided, which is low in viscosity and high in sensitivity to the high-energy ray, which is excellent in curing property, and which overcomes the problem of brittleness of the thus-cured film. Further, according to the present invention, an image-forming method of forming an image on a recording material by using the ink composition, and a recorded material by using the ink composition, can also be provided.

The present invention will be described in more detail based on the following examples, but the invention is not intended to be limited thereto. In the following Examples and Comparative examples, preparation of an ink for inkjet-recording will be described as an example of the ink composition.

### EXAMPLES

### <Preparation of pigment dispersion>

The pigment and dispersant, as shown in Table 1, were placed in a ball mill, and pulverized for 16 hours, by using zircon beads of diameter 0.6 mm, to give a pigment dispersion. The average particle diameter of the pigment dispersion was determined by using a transmission electron microscope (TEM). Measurement results are summarized in Table 1.

**Table 1**

| | Pigment dispersion-1 | Pigment dispersion-2 |
|---|---|---|
| Pigment (mass%) | | |
| Irgalite Blue GLVO (PB-15;4), trade name, manufactured by Ciba Speciality Chemicals Chromophatal Jet Magenta DMQ (PR-122), trade name, manufactured by Ciba Speciality Chemicals | 20 | - |
| | - | 20 |
| Polymerizable compound (mass%) | | |
| Aron Oxetane OXT-221, trade name, manufactured by Toagosei Co., Ltd. Celoxide 3000, trade name, manufactured by Daicel-Cytec (former Daicel UCB) | 74 | - |
| | - | 74 |
| Dispersant (mass%) | | |
| Solsperse 28000, trade name, manufactured by Lubrizol Solsperse 32000, trade name, manufactured by Lubrizol | 6 | - |
| | - | 6 |
| Average particle diameter (nm) | 85 | 78 |

### Examples 1 to 6

### <Composition and preparation of inks>

To the photocationically-polymerizable compounds of 40 g of Celoxide 3000 (manufactured by Daicel UCB) and 30 g of Aron Oxetane OXT-221 (manufactured by Toagosei Co., Ltd.), were added and mixed with 10 g of the above Pigment dispersion-1, a monofunctional oxirane group-containing compound as specified in the present invention (a monomer according to the present invention), a photopolymerization initiator, and a sensitizer, each in the amounts shown in the following Tables 2 and 3, and 0.1 g of a surfactant (Dispereyk-370, trade name, manufactured by BYK-Chemie), while agitating, and the resultant mixture was filtered through a 5.0-µm membrane filter, to give a cyan ink.

The unit of the amount to be added of each component in the tables is g.

### Comparative examples 1 to 4

As shown in Tables 2 and 3, cyan inks for comparison were prepared in the same manner as in Examples 1 to 6, except that the monofunctional oxirane group-containing compound as specified in the present invention was not added (Comparative examples 1 and 3), or that the monomer, photopolymerization initiator, and sensitizer were changed to other compounds (Comparative examples 2 and 4), as shown in Tables 2 and 3.

Then, each of the cyan inks thus obtained in Examples 1 to 6 and Comparative examples 1 to 4 was subjected to printing and exposure tests, according to the methods described below.

The structural formulae of the components used in Examples 1 to 6 and Comparative examples 1 to 4 above are as follows:
1. Celoxide 3000 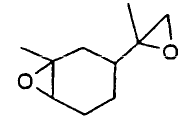
2. Aron Oxetane OXT-221 (bis[1-ethyl(3-oxetanyl)] methyl ether) 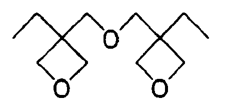
3. Monofunctional oxirane group-containing compound
   a. Rika Resin L-200 (trade name, manufactured by New Japan Chemicals) 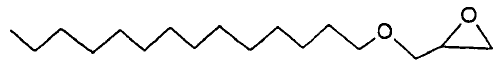
   b. Vikolox 10 (trade name, manufactured by ARKEMA) 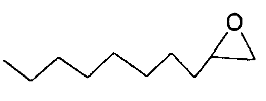
   c. Vikolox 16 (trade name, manufactured by ARKEMA) 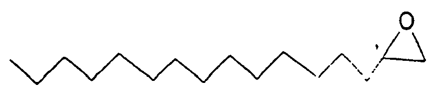
4. Epoxidized fatty acid ester
   Sansocizer E-6000 (trade name, manufactured by New Japan Chemicals)
5. Light Acrylate LA (trade name, manufactured by Kyoeisha Chemical) 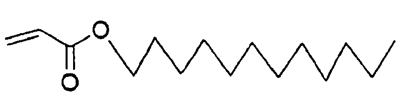
6. HDDA (trade name, manufactured by Daicel UCB) 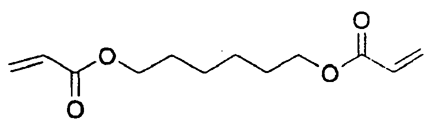
7. DPCA 60 (trade name, manufactured by Nippon Kayaku Co., Ltd.)

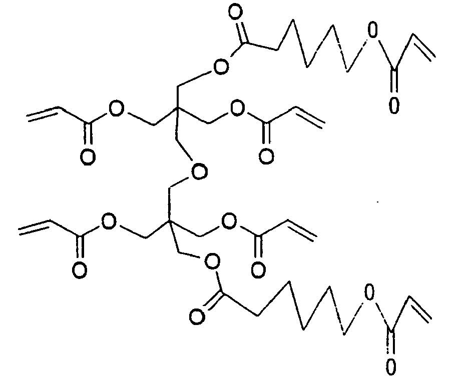

**Table 2**

| | | Polymerizable compound | | | Initiator | Sensitizer | LED sensitivity | Brittleness (punch hole test) | Viscosity (25°C) |
|---|---|---|---|---|---|---|---|---|---|
| | | Celoxide 3000 | OXT-22) | Monomer according to this invention | Irg.250 | ITX | | | |
| Example according to this invention | 1 | 40 | 30 | 30 (Rika Resin L-200) | 6 | 3 | 71 mJ/cm² | 5 | 11 mPa·s |
| | 2 | 50 | 30 | 20 (Rika Resin L-200) | 6 | 3 | 71 mJ/cm² | 5 | 11 mPa·s |
| | 3 | 60 | 30 | 10 (Rika Resin L-200) | 6 | 3 | 71 mJ/cm² | 5 | 11 mPa·s |
| | 4 | 30 | 30 | 40 (Rika Resin L-200) | 6 | 3 | 71 mJ/cm² | 5 | 11 mPa·s |
| | 5 | 40 | 30 | 30 (Vikolox 10) | 6 | 3 | 71 mJ/cm² | 5 | 6 mPa·s |
| | 6 | 40 | 30 | 30 (Vikolox 16) | 6 | 3 | 71 mJ/cm² | 5 | 9 mPa·s |
| Comparative example | 1 | 70 | 30 | 0 (no addition) | 6 | 3 | 89 mJ/cm² | 1 | 12 mPa·s |
| | 2 | 40 | 30 | 30 (butyl glycidyl ether) | 6 | 3 | 71 mJ/cm² | 1 | 6 mPa·s |

**Table 3**

| | | Polymerizable compound | | | Initiator | Sensitizer | LED sensitivity | Brittleness (punch hole test) | Viscosity (25°C) |
|---|---|---|---|---|---|---|---|---|---|
| | | HDDA | DPCA60 | Monomer for | Irg_{.}1870 | ITX | | | |
| Comparative example | 3 | 70 | 30 | 0 (radical-type) | 9 | 4.5 | 400 mJ/cm² | 3 | 26 mPa·s |
| | 4 | 40 | 30 | 30 (Light Aerate LA) | 9 | 4.5 | Not cured | --- | 18 mPa·s |

### <Tests for ink>

### 1. Printing and exposure test

Each of the inks prepared in Examples and Comparative examples was ejected by using a piezoelectric head. The head had 318 nozzles placed at a nozzle density of 150/25.4-mm, and two heads were aligned to dislocate or stagger in a distance of half of the nozzle gap in the nozzle line direction, so that 300 ink droplets per 25.4 mm in the direction of the nozzle line were ejected and reached onto the medium.

The temperatures of the head and ink were controlled to 50±0.5°C in the area closed to the ejection nozzle by circulation of hot water in the head.

In the Examples and Comparative examples, ink ejection from the head was controlled by the piezoelectric drive signal given to the head, and it was possible to control the volume of an individual droplet to be 6 to 42 pl; and the ink droplet was ejected from the head onto a medium being conveyed at a position 1 mm below the head. The conveying speed was variable to set within the range of 50 to 200 mm/s. The piezoelectric drive frequency was also variable up to 4.6 kHz, and it was possible to control the amount of the ink droplet by these settings. In the Examples and Comparative examples, a contact-printed image was obtained, by ejecting the ink droplets in an amount of 20 g/m², by setting the conveying speed to 90 mm/s and the drive frequency to 1.9 kHz and controlling the ink ejection quantity to 48 pl.

After ink ejection, the medium is conveyed to an exposure region, where the medium was exposed to the light from a ultraviolet light-emitting diode (UV-LED). The UV-LED used in the Examples and Comparative examples was NCCU033, trade name, manufactured by Nichia Corporation. The LED emits a UV ray of wavelength 365 nm from one chip, at an output light of approximately 100 mW by application of electric current at approximately 500 mA. The UV-LEDs were aligned with an interval of 7 mm, to give a power of 0.3 W/cm² on the medium surface. The period of time from ink ejection to exposure and the exposure time period were variable, according to the medium conveying speed and the distance between the head and the LED in the conveying direction. In the Examples and Comparative examples, the exposure to light was conducted approximately 0.5 second after the ejected ink droplets reached on the medium.

It was possible to adjust the exposure energy on the medium within the range of 0.01 to 15 J/cm², according to the settings of the conveying speed of and the distance with the medium. In the Examples and Comparative examples, the exposure energy was adjusted according to the conveying speed.

The exposure power and the exposure energy were determined as an integral value in the wavelength range of 220 to 400 nm measured by using Spectroradiometer URS-40D (trade name) manufactured by Ushio Inc.

The medium used in the Examples and Comparative examples was a PET film of thickness 50 µm, and the printing and exposure tests were conducted under the environment at 23°C and R.H. 60%. The thickness of the thus-cured image was 19 µm.

### 2. LED sensitivity test

On the thus-printed sample immediately after exposure, a free sheet (wood-free paper) was laid up, and the resultant sample on which the paper was laid up was pressed through a pressure roller (50 kg/cm²). The energy of LED at which the colorant in the image would not transfer onto the paper, is designated as the sensitivity.

### 3. Brittleness test

A sample printed on a 175-µm PET was punched with a two-hole punch (Type C, trade name, manufactured by MAX), and the surface state of the thus-punched out circular sample was observed and evaluated according to the following criteria:
Rank 5: No exfoliation (peeling-off) of the ink was observed.
Rank 4: The ink at the peripheral portion was partially lacked.
Rank 3: The ink at the peripheral portion was partially exfoliated.
Rank 2: The ink at the peripheral portion was exfoliated.
Rank 1: The ink at the entire surface was exfoliated and crumbled.

### 4. Viscosity measurement

The viscosity of the ink held at 25°C was measured, by using RE80L-type viscometer (trade name, manufactured by Toki Sangyo Co., Ltd.) and a conical rotor (1°34' × 24R), at a frequency of 20 rpm when the viscosity was less than 30 mPa·s or 10 rpm or lower when it was not less than 30 mPa·s.

As is apparent from the results shown in Tables 2 and 3, the ink of Comparative example 1, which contained no monofunctional oxirane group-containing compound, was conspicuously poor in the brittleness, and also poor in the LED sensitivity. The ink of Comparative example 3, which used a radical-type polymerizable compound, was high in the ink viscosity, poor in the brittleness, and conspicuously low in the LED sensitivity. The ink of Comparative example 2, which used butyl glycidyl ether having fewer than 8 carbon atoms as the monofunctional oxirane group-containing compound, was excellent in the LED sensitivity and low in the ink viscosity, but was conspicuously poor in the brittleness. Further, the ink of Comparative example 4, which used Light Acrylate LA as the radical-type monomer, was low in the ink viscosity, but was not cured by irradiation from the LED.

In contrast to those inks of Comparative examples, the inks in Examples 1 to 6 according to the present invention, were quite low in the viscosity at 11 mPa·s or less, and preferably good in the LED sensitivity, and gave an excellent image cured and printed that did not show brittleness.

## Claims

1. An ink composition comprising:
(i) an oxirane compound consisting of a monofunctional oxirane group-containing compound having an alkyl group having 8 or more carbon atoms and optionally a multifunctional oxirane group-containing compound,
(ii) 20 to 40 mass % of an oxetane group-containing photocationically polymerisable compound, and
(iii) a photocationic polymerisation initiator,
wherein the amount of the oxirane compound (i) is greater than the amount of the oxetane group-containing compound (ii).

2. An ink composition according to Claim 1, further comprising a pigment or an oil-soluble dye, as a colourant.

3. Use of an ink composition according to Claim 1 or Claim 2 for ink-jet recording.

4. An image-forming method comprising recording an image by inkjet-recording using the ink composition as defined in Claim 1 or Claim 2.

5. An image-forming method comprising the steps of:
printing an image on a recording material on which said image is to be recorded, by using the ink composition as defined in Claim 1 or Claim 2; and
curing the image printed on the recording material in the image-printing step by irradiating said image with a high-energy ray.

6. An image-forming method according to Claim 5, wherein the light source for irradiation of the high-energy ray is a light-emitting diode.

7. An image-forming method according to Claim 5 or Claim 6, wherein the central wavelength of the high-energy ray is 365±20 nm.

8. An image-forming method according to any one of Claims 5-7, wherein the thickness of the image cured in the image-curing step is 2 to 30 µm.

9. A recorded material obtainable by using the ink composition as defined in Claim 1 or Claim 2.

## Patentansprüche

1. Tintenzusammensetzung, umfassend:
(i) eine Oxiranverbindung, die aus einer eine monofunktionelle Oxirangruppe enthaltenden Verbindung, die eine Alkylgruppe mit 8 oder mehr Kohlenstoffatomen aufweist, und optional einer eine multifunktionelle Oxirangruppe enthaltenden Verbindung besteht,
(ii) 20 bis 40 Masse-% einer eine Oxetangruppe enthaltenden fotokationisch polymerisierbaren Verbindung und
(iii) einen fotokationischen Polymerisationsinitiator,
worin die Menge der Oxiranverbindung (i) grösser ist als die Menge der eine Oxetangruppe enthaltenden Verbindung (ii).

2. Tintenzusammensetzung gemäss Anspruch 1, ferner umfassend ein Pigment oder einen öllöslichen Farbstoff als Färbemittel.

3. Verwendung einer Tintenzusammensetzung gemäss Anspruch 1 oder Anspruch 2 für die Tintenstrahl-Aufzeichnung.

4. Bilderzeugungsverfahren, umfassend die Aufzeichnung eines Bildes durch Tintenstrahl-Aufzeichnung unter Verwendung der Tintenzusammensetzung, wie sie in Anspruch 1 oder Anspruch 2 definiert ist.

5. Bilderzeugungsverfahren, umfassend die Schritte:
Drucken eines Bildes auf ein Aufzeichnungsmaterial, auf dem das Bild aufgezeichnet werden soll, unter Verwendung der Tintenzusammensetzung, wie sie in Anspruch 1 oder Anspruch 2 definiert ist; und
Härten des Bildes, das auf das Aufzeichnungsmaterial gedruckt ist, in dem Bilddruckschritt durch Bestrahlen des Bildes mit Hochenergiestrahlung.

6. Bilderzeugungsverfahren gemäss Anspruch 5, worin die Lichtquelle für die Bestrahlung mit Hochenergiestrahlung eine LED ist.

7. Bilderzeugungsverfahren gemäss Anspruch 5 oder Anspruch 6, worin die mittlere Wellenlänge der Hochenergiestrahlung 365 ± 20 nm beträgt.

8. Bilderzeugungsverfahren gemäss irgendeinem der Ansprüche 5 bis 7, worin die Dicke des Bildes, das im Bildhärtungsschritt gehärtet wird, 2 bis 30 µm beträgt.

9. Aufgezeichnetes Material/Drucksache, erhältlich unter Verwendung der Tintenzusammensetzung, wie sie in Anspruch 1 oder Anspruch 2 definiert ist.

## Revendications

1. Composition d'encre comprenant :
(i) un composé d'oxiranne consistant en un composé contenant un groupe oxiranne monofonctionnel ayant un groupe alkyle ayant 8 atomes de carbone ou plus et optionnellement un composé contenant un groupe oxiranne multifonctionnel,
(ii) 20 à 40 % en masse d'un composé polymérisable photocationiquement contenant un groupe oxétane, et
(iii) un initiateur de polymérisation photocationique,
dans laquelle la quantité du composé d'oxiranne (i) est plus grande que la quantité du composé contenant un groupe oxétane (ii).

2. Composition d'encre selon la revendication 1, comprenant en outre un pigment ou une teinture soluble dans l'huile, en tant que colorant.

3. Utilisation d'une composition d'encre selon la revendication 1 ou la revendication 2 pour l'enregistrement à jet d'encre.

4. Procédé de formation d'image comprenant l'enregistrement d'une image par un enregistrement à jet d'encre en utilisant la composition d'encre telle que définie dans la revendication 1 ou la revendication 2.

5. Procédé de formation d'image comprenant les étapes consistant à :
imprimer une image sur une matière d'enregistrement sur laquelle ladite image doit être enregistrée, en utilisant la composition d'encre telle que définie dans la revendication 1 ou la revendication 2 ; et
cuire l'image imprimée sur la matière d'enregistrement dans l'étape d'impression d'image en irradiant ladite image avec un rayonnement de haute énergie.

6. Procédé de formation d'image selon la revendication 5, dans lequel la source de lumière pour l'irradiation du rayon de haute énergie est une diode électroluminescente.

7. Procédé de formation d'image selon la revendication 5 ou la revendication 6, dans lequel la longueur d'onde centrale du rayonnement de haute énergie est de 365 ± 20 nm.

8. Procédé de formation d'image selon l'une quelconque des revendications 5 à 7, dans lequel l'épaisseur de l'image cuite dans l'étape de cuisson d'image est de 2 à 30 µm.

9. Matière enregistrée que l'on peut obtenir en utilisant la composition d'encre telle que définie dans la revendication 1 ou la revendication 2.
